# EUROPÄISCHE PATENTSCHRIFT

(11) **EP 3 563 931 B1**
(45) Veröffentlichungstag und Bekanntmachung des Hinweises auf die Patenterteilung: **18.11.2020**
(21) Anmeldenummer: 18170596.3
(22) Anmeldetag: 03.05.2018
(51) Int. Cl.: B01L 9/00

(54) **PIPETTENSPITZEN-LAGERBOX**
PIPETTE TIP STORAGE BOX
BOÎTE DE STOCKAGE POUR POINTES DE PIPETTE

(43) Veröffentlichungstag der Anmeldung: 06.11.2019
(73) Patentinhaber: TECAN TRADING AG, 8708 Männedorf (CH)
(72) Erfinder: KNOPPKE, Marina, 8623 Wetzikon (CH)
(74) Vertreter: Troesch Scheidegger Werner AG

(56) Entgegenhaltungen:
- EP-B1- 1 414 574
- WO-A1-2016/094553
- WO-A2-2010/085669
- WO-A2-2011/116230

## Beschreibung

### TECHNISCHES GEBIET DER ERFINDUNG

Die vorliegende Erfindung betrifft eine Lagerbox für Kunststoff-Pipettenspitzen. Die Lagerbox umfasst ein Rahmenteil, welches aus zwei Längsseiten und zwei Querseiten gebildet wird, und eine obere Trägerplatte. Die obere Trägerplatte umfasst eine Vielzahl von Lageröffnungen, in die Pipettenspitzen eingesetzt werden können. Zudem wird ein Verfahren zum Ableiten elektrostatischer Ladungen von Kunststoff-Pipettenspitzen vorgeschlagen sowie eine Verwendung der oben genannten Lagerbox in einer automatisierten Liquidhandling-Plattform.

### HINTERGRUND DER ERFINDUNG

Lagerboxen zum Lagern von Kunststoff-Pipettenspitzen sind an sich aus dem Stand der Technik gut bekannt. Insbesondere bei der Durchführung biochemischer oder anderer Prozesse werden solche Boxen verwendet, um Kunststoff-Pipettenspitzen dem Benutzer geordnet bereitzustellen. Typischerweise werden solche Kunststoff-Pipettenspitzen als Einweg-Pipettenspitzen eingesetzt; sie werden also nach einmaligem Gebrauch (z.B. nach dem Pipettieren einer spezifischen Flüssigkeit) entsorgt. Auf diese Weise kann vermieden werden, dass durch einen Mehrfachgebrauch ungewollt Flüssigkeitsreste aus vorhergegangenen Pipettierschritten in Proben mitgeschleppt werden. Insbesondere, wenn Proben in sogenannten Mikroplatten mit einer hohen Dichte von Probengefässen - den sogenannten Wells - bearbeitet werden, ist das zu untersuchende Probenvolumen eher klein (es beläuft sich im Bereich von Mikrolitern (µl)), so dass kontaminierende Flüssigkeitstropfen einen starken Effekt auf die mit der Probe durchgeführten Reaktionen haben können.

Der Einsatz dieser Mikroplatten ist insbesondere dann von Vorteil, wenn eine Vielzahl von Proben systematisch untersucht werden soll. Mikroplatten werden heutzutage vor allem in einem standardisierten Format vertrieben (z.B. Norm ANSI_SLAS_1-4 2004; American National Standards Institute, 2006). Je nach Plattentyp kann eine unterschiedliche Anzahl Proben in einer Mikroplatte behandelt werden, wobei die Wells jeweils in einem speziellen Array und mit spezifischem Achsabstand zueinander angeordnet sind. So sind z.B. bei 96-Well Mikroplatten 8 x 12 Wells mit einem Achsabstand von jeweils 9 mm angeordnet, oder Wells bei 384-Well Mikroplatten sind 16 x 24 Wells mit einem Achsabstand von jeweils 4,5 mm zueinander angeordnet. Die Grundfläche der Mikroplatte, der sogenannte Footprint, ist bei den verschiedenen Plattentypen dabei gleich, so dass zum Beispiel in dem gleichen Gerät verschiedene Plattentypen verwendet werden können.

Auch ist die Verwendung von automatisierten Liquidhandling-Plattformen bekannt, mit denen mit hoher Präzision und hohen Durchsatzraten automatisiert Flüssigkeiten zwischen verschiedenen Gefässen und/oder Proben pipettiert werden können. Beispielhaft seien Plattformen der Freedom EVO®-Serie des aktuellen Anmelders genannt. Solche Plattformen weisen in der Regel einen Pipettierkopf auf, an welchem eine Vielzahl von automatisiert betriebenen Pipetten angeordnet sein können. Diese werden zur Abgrenzung von sogenannten Einkanal-Pipettierköpfen auch als Mehrkanal-Pipettierköpfe bezeichnet. Bekannt sind z.B. 8-fach-Pipettierköpfe mit 8 Pipetten, oder auch 96-er Pipettierköpfe mit entsprechend 96 Pipetten. Die Pipetten sind in der Regel in einem Abstand zueinander angeordnet, der dem Achsabstand von Wells einer Standardmikroplatte entspricht.

Auf jede Pipette (sowohl bei Einkanal- als auch bei Mehrkanal-Geräten) kann eine Pipettiernadel (in der Regel aus Metall zum Mehrfachgebrauch) oder eine Kunststoff-Pipettenspitze (zum Einweg-Gebrauch) dichtend aufgesetzt werden, wobei verschiedene Mechanismen angewendet werden können. Zum Beispiel gibt es Kunststoff-Pipettenspitzen, für die zum Aufsetzen der Pipettierkopf so weit abgesenkt wird, dass die Pipetten dieses Pipettierkopfes von oben so weit in eine AufnahmeÖffnung der Pipettenspitzen einfahren, bis die Pipettenspitzen reibschlüssig am Ende der jeweiligen Pipette gehalten werden. Alternativ kann der Pipettierkopf eigene Aufnahmeöffnungen umfassen, in welche Pipettenspitzen mit ihrem oberen Ende dichtend eingesteckt werden. Solche Aufnahmeöffnungen können durch eine Lochplatte bereitgestellt werden, die am Pipettierkopf integriert ist.

Die Pipettenspitzen werden dabei in einer eingangs erwähnten Lagerbox breitgestellt, wobei sie ebenfalls in einem standardisierten Array und mit der Aufnahmeöffnung nach oben angeordnet sind. Insbesondere bei der Verwendung solcher Pipettierköpfe ist es vorteilhaft, wenn auch die zu verwendenden Pipettenspitzen standardisiert dem Pipettierkopf angeboten werden.

Zum Verwerfen von Kunststoff-Pipettenspitzen nach dem Gebrauch wird ein Abwerfmechanismus verwendet, mit dem die Pipettenspitzen vom Pipettenende abgeschoben werden. Die Kunststoff-Pipettenspitzen können dabei in einen Abfallbehälter abgeworfen werden, oder wieder in die Lageröffnungen der Lagerbox eingesetzt werden. Analog können Kunststoff-Pipettenspitzen auf Handpipetten aufgesetzt und abgeworfen werden.

Solche Einweg-Pipettenspitzen werden typischerweise aus Polypropylen gefertigt. Auf diese Weise können die Pipettenspitzen (im englischen auch pipette tips genannt) kostengünstig hergestellt und bei Bedarf einfach sterilisiert werden. Ausserdem zeichnet sich Polypropylen durch eine gute chemische Beständigkeit aus. Es hat sich jedoch gezeigt, dass sich solche Kunststoff-Pipettenspitzen durch die entstehende Reibung zum Beispiel beim Aufsetzen auf eine Pipette oder beim Abwerfen durch den Abwerfmechanismus elektrostatisch aufladen. Ebenso kann bereits das Entfernen einer Verpackungsfolie von der Lagerbox zum elektrostatischen Aufladen der Pipettenspitzen führen, da häufig auch die Lagerboxen aus Polypropylen hergestellt sind. Elektrostatische Ladungen können dann von der Lagerbox auf die Pipettenspitzen übertragen werden.

Solche elektrostatisch aufgeladenen Kunststoff-Pipettenspitzen können sich jedoch nachteilig auf den Automatisations-Prozess auswirken, da sie zum Beispiel beim Abwerfen dazu tendieren, an den Pipetten des Pipettierkopfes haften zu bleiben und so nicht mehr in die Lagerbox zurückplatziert werden können. Solche anhaftenden Pipettenspitzen können dann das Aufnehmen einer nächsten Pipettenspitze blockieren, oder sie fallen unkontrolliert auf dem Arbeitsfeld ab, so dass wiederum Kontaminationen verbreitet werden können oder Arbeitsvorgänge auf dem entsprechenden Bereich des Arbeitsfelds blockiert sind. Ebenfalls können sich geladene Pipettenspitzen, wenn sie beispielsweise in einer Lagerbox gelagert sind, gegenseitig abstossen. Dies kann dazu führen, dass sie nicht mehr genügend axial ausgerichtet sind, und beim Aufsetzen auf einen Pipettierkopf verkanten oder gar verformt werden.

Aus dem Dokument EP 1 414 574 B2 ist ein Pipettenspitzen-Trägerfür Kunststoff-Pipettenspitzen bekannt, bei welchem immer mindestens die Tragplatte mit den Aufnahmeöffnungen für die Pipettenspitzen und eine der Seitenwände elektrisch leitfähig sind. Eventuell vorhandene elektrostatische Ladungen sollen so beim Wiedereinsetzen der Pipettenspitzen auf die Tragplatte abgeführt werden.

Aus dem Dokument US 2016/0167041 A1 ist eine Aufbewahrungsvorrichtung für Pipettenspitzen zum Bekämpfen von elektrostatischen Aufladungen bekannt. Die Pipettenspitzen können dazu in Aufnahmen einer elektrisch leitfähigen Rückhalteplatte eingesetzt werden, so dass elektrostatische Ladungen auf die Rückhalteplatte übertragen werden können. Die Rückhalteplatte kann zusammen mit eingesetzten Pipettenspitzen auf eine Lagerbox aufgesetzt werden.

Weiter ist aus dem Dokument EP 2 389 247 B1 ein Pipettenspitzentablett bekannt, welches einen Deckel mit einem elektrisch leitfähigen Element aufweist. Das elektrisch leitfähige Element ist im Kontakt mit den oberen Flächen eingesetzter Pipettenspitzen und dem Deckel. Elektrische Ladungen werden so auf den Deckel übertragen.

### ZUSAMMENFASSUNG DER ERFINDUNG

Eine Aufgabe der vorliegenden Erfindung besteht darin, eine Pipettenspitzen-Lagerbox bereitzustellen, die einfach aufgebaut ist und mit welcher elektrostatisch aufgeladene Kunststoff-Pipettenspitzen einfach und möglichst effektiv entladen werden können.

Die Aufgabe wird durch eine Lagerbox für Kunststoff-Pipettenspitzen gemäss dem unabhängigen Anspruch 1 gelöst.

Durch das Bereitstellen eines zumindest teilweise elektrisch leitfähigen Pipettenspitzen-Kontaktstücks und optional einer zumindest teilweise elektrisch leitfähigen Bodenplatte, welche jeweils an der Unterseite der Lagerbox angeordnet ist, können während des normalen Gebrauchs der Lagerbox im Laborbetrieb eventuell entstandene elektrostatische Ladungen auf das Pipettenspitzen-Kontaktstück und gegebenenfalls auf die optionale Bodenplatte abgeleitet werden.

Dabei wird durch das Pipettenspitzen-Kontaktstück ein direkter Kontakt zwischen eingesteckten Pipettenspitzen hergestellt, und potentielle elektrostatische Ladungen können auf das Pipettenspitzen-Kontaktstück übergehen.

Eine weitere Aufgabe der Erfindung besteht darin, ein Verfahren bereitzustellen, mit welchem elektrostatisch aufgeladene Kunststoff-Pipettenspitzen einfach und möglichst schon vor ihrer Benutzung entladen werden können.

Diese Aufgabe wird durch das Bereitstellen eines Verfahrens gemäss dem unabhängigen Anspruch 19 gelöst, in welchem unter anderem eine erfindungsgemässe Lagerbox bereitgestellt wird.

Vorteilhafte Ausführungsformen der Erfindung werden in den abhängigen Ansprüchen angegeben.

### KURZE BESCHREIBUNG DER FIGUREN

Die vorliegende Erfindung wird anhand der nachfolgenden, beispielhaften schematischen Figuren (Fig.) näher erläutert. Es zeigt
- Fig. 1: einen stark schematisierten Querschnitt durch eine Lagerbox mit leitfähigem Boden und leitfähigen Stegen als Pipettenspitzen-Kontaktstück;
- Fig. 2: stark schematisierte, räumliche Darstellungen einer Lagerbox mit leitfähigem Boden und leitfähigen Stegen, wobei
Fig. 2A eine Übersicht über eine Lagerbox zeigt, bei welcher das Pipettenspitzen-Kontaktstück und der optionale Boden von dem Rahmen abgenommen sind, und
Fig. 2B einen Längsschnitt durch die in Figur 2A gezeigte Lagerbox mit angestecktem Pipettenspitzen-Kontaktstück und Boden zeigt;
- Fig. 3: stark schematisierte Aufsichten auf die Oberseite einer Lagerbox, wobei verschiedene Anordnungen von Längsstegen beziehungsweise Querstegen gestrichelt angedeutet sind, und wobei
Fig. 3A eine Lagerbox mit Querstegen und Längsstegen,
Fig. 3B eine Lagerbox mit Längsstegen, und
Fig. 3C eine Lagerbox mit Querstegen zeigt;
- Fig. 4.: stark schematisierte Querschnitte durch verschiedene Beispiele einer Lagerbox mit leitfähigem Boden, wobei
Fig. 4A eine Lagerbox zeigt, an welche der Boden mit den Stegen von unten ansteckbar ist, und
Fig. 4B eine Lagerbox zeigt, welche in einen separaten Lagercontainer einsetzbar ist, wobei der Lagercontainer einen leitfähigen Boden und leitfähige Stege umfasst ist;
- Fig. 5: einen stark schematisierten Querschnitt durch eine Lagerbox mit alternativen Pipettenspitzen-Kontaktstücken, wobei
Fig. 5A eine Lagerbox mit einstückig geformten, leitfähigen Boden und Pipettenspitzen-Kontaktstücken zeigt, wobei Pipettenspitzen-Kontaktstücke mit verschiedenen Höhen gezeigt sind;
Fig. 5B eine Lagerbox mit Pipettenspitzen-Kontaktstücken verschiedener Höhen und aus verschiedenen Materialien zeigt, und
- Fig. 6: eine stark schematisierte Übersicht über eine Liquidhandling-Arbeitsstation mit einer Arbeitsfläche und auf dieser positionierter Lagerbox und Standard-Mikroplatte zeigt.

### DETAILLIERTE BESCHREIBUNG DER ERFINDUNG

Die vorliegende Erfindung betrifft eine Lagerbox 1, in welche Pipettenspitzen 2 eingesetzt und gelagert werden können. Insbesondere ist die Lagerbox 1 zur Verwendung mit Pipettenspitzen 2 aus Kunststoff geeignet. Solche Pipettenspitzen 2 werden häufig für den Einweg-Gebrauch verwendet, sie werden also nach einer Benutzung oder zumindest nach wenigen Benutzungen vorwiegend weggeworfen. Werden Kunststoff-Pipettenspitzen 2 in einer im folgenden beschriebenen Lagerbox 1 gelagert, können elektrostatische Ladungen, die bei einer normalen Handhabung der Pipettenspitzen 2 ungewollt entstehen, einfach von den Pipettenspitzen 2 abgeführt werden.

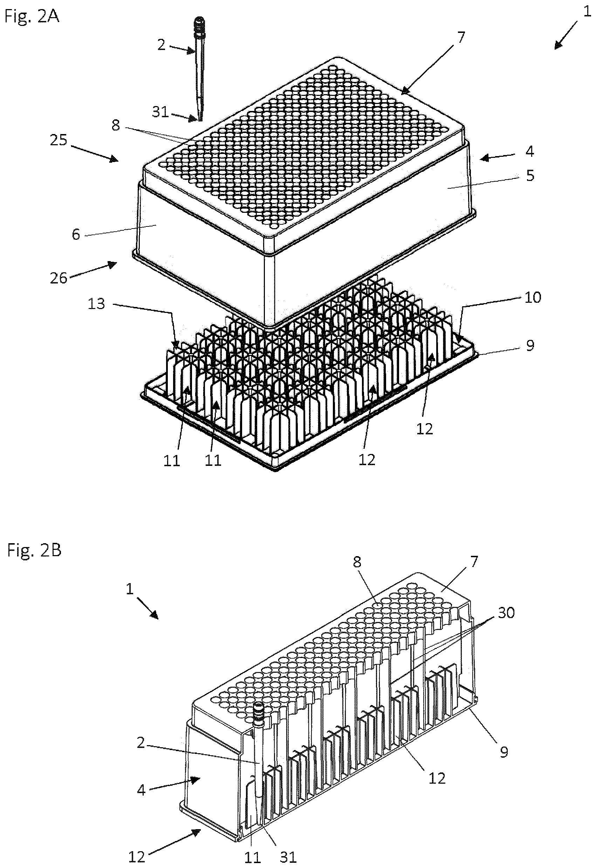

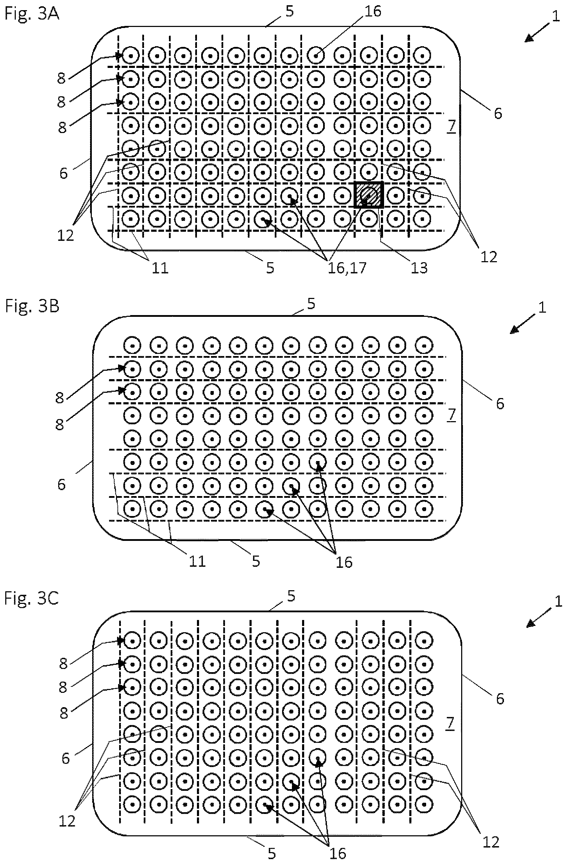

In den Figuren sind verschiedene, beispielhafte Lagerboxen 1 gezeigt. Die Lagerbox 1 für Kunststoff-Pipettenspitzen 2 umfasst ein Rahmenteil 4, welches bevorzugt rechteckig ist. Das Rahmenteil 4 wird von zwei Längswänden 5 und zwei Querwänden 6 gebildet. Die beiden Längswände 5 und die beiden Querwände 6 umschliessen einen Innenraum seitlich und lassen an der Oberseite 25 des Rahmenteils 4 eine erste Öffnung und an der Unterseite 26 des Rahmenteils 4 eine zweite Öffnung frei. Insbesondere aus den Figuren 2 und 3 sind die Längs- und Querwände 11,12 und der von ihnen gebildete Rahmen zu entnehmen. In den Innenraum können die Pipettenspitzen 2 hineinragen, wenn sie in die Lagerbox 1 eingesetzt sind.

In jeder Ausführungsform der Erfindung ist das Rahmenteil 4 im Wesentlichen elektrisch nicht-leitfähig. Bevorzugt ist das Rahmenteil 4, also die Längswände 5 und die Querwände 6, aus einem Kunststoff hergestellt, welcher eine sehr niedrige elektrische Leitfähigkeit aufweist.

An der Oberseite 25 des Rahmenteils 4 ist eine Trägerplatte 7 angeordnet. Die Trägerplatte 7 erstreckt sich entlang der ersten Öffnung des Rahmenteils 4 und im Wesentlichen senkrecht zu den Längswänden 5 und den Querwänden 6. Sie deckt damit die erste Öffnung im Wesentlichen ab. Bevorzugt ist die Trägerplatte 7 mit der Oberseite 25 des Rahmenteils 4, also mit den jeweiligen Oberseiten der Längs- und Querwände 5,6 verbunden.

In jeder Ausführungsform der Erfindung ist auch die Trägerplatte 7 im Wesentlichen elektrisch nicht-leitfähig. Bevorzugt ist auch die Trägerplatte 7 aus einem Kunststoff hergestellt, welcher eine sehr niedrige elektrische Leitfähigkeit aufweist.

Beispielhafte Materialien für das elektrisch nicht-leitfähige Rahmenteil 4 oder für die elektrisch nicht-leitfähige Trägerplatte 7 sind Kunststoffpolymere wie zum Beispiel Polypropylene oder Polyethylene.

Die Trägerplatte 7 umfasst eine Vielzahl von Lageröffnungen 8 für Kunststoff-Pipettenspitzen 2. Jede Lageröffnung 8 durchdringt die Trägerplatte 7 vollständig. In jeweils eine Lageröffnung 8 kann jeweils eine Pipettenspitze 2 eingesetzt werden. Typischerweise weisen Pipettenspitzen 2 an ihrem oberen, dem Flüssigkeits-Auslass gegenüberliegendem Ende eine Haltestruktur auf, mit welcher sie in der Lageröffnung 8 gehalten werden. Dies kann beispielsweise ein umlaufender Kragen, Haltestege oder ein umlaufender Kunststoff- oder Gummiring sein, der grösser ist als der Durchmesser der jeweiligen Lageröffnung 8. So wird verhindert, dass eine eingesetzte Pipettenspitze 2 durch eine Lageröffnung 8 durchrutscht.

Die Anzahl an Lageröffnungen 8 in derTrägerplatte 7 ist bevorzugt so gewählt, dass sie der Anzahl von Wells einer Standard-Mikroplatte 27 entspricht. Beispielhaft genannt sind hier 96, 384 oder 1536 Wells. Ist die Anzahl der Lageröffnungen 8 an eine Standard-Mikroplatte angepasst, sind die Lageröffnungen 8 bevorzugt in einem Array in der Trägerplatte 7 eingelassen, welcher dem Array von Wells der jeweiligen Standard-Mikroplatte 27 entspricht. Bei 96 Lageröffnungen 8 entspricht dies beispielsweise einem Array von 8 mal 12 Lageröffnungen (siehe Figuren 3A bis 3C), bei 384 Lageröffnung (siehe Figur 2A) einem Array von 16 mal 24.

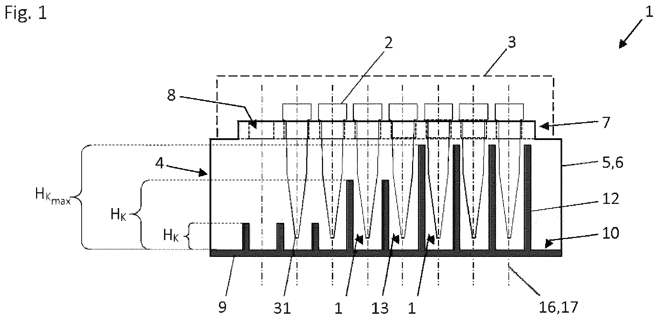

Es kann vorgesehen sein, dass die Längs- und Querwände 5,6 nicht, wie in Figur 1 gezeigt, vollständig in einem rechten Winkel zu der Trägerplatte 7 angeordnet sind, sondern in einem davon leicht abweichenden Winkel. Insbesondere können die Längs- und Querwände 5,6 so zur Trägerplatte 7 angeordnet sein, dass sie in Richtung der Unterseite 26 des Rahmenteils 4 auseinandergespreizte Seitenwände bilden (siehe Figur 2A). So kann sich eine verbesserte Standfestigkeit der Lagerbox 1 ergeben.

Erfindungsgemäss umfasst die Lagerbox 1 an ihrer Unterseite 26 ein zumindest teilweise elektrisch leitfähiges Pipettenspitzen-Kontaktstück 14 zum Kontaktieren zumindest einer in eine der Lageröffnungen 8 eingesetzten Pipettenspitze 2. Das Pipettenspitzen-Kontaktstück 14 erstreckt sich dabei von der Unterseite des Rahmenstücks ausgehend in Richtung der Oberseite 25 der Lagerbox 1, also in Richtung der Trägerplatte 7, um eine Höhe H_{K}. Diese Höhe H_{K} ist so gewählt, dass im normalen Gebrauch eingesetzte Pipettenspitzen 2 das Pipettenspitzen-Kontaktstück 14 berühren können. Bevorzugt ist die Höhe H_{K} so gewählt, dass eine eingesetzte Pipettenspitze 2 das Pipettenspitzen-Kontaktstück 14 zumindest mit ihrem unteren Ende, bevorzugt mit ihrem Auslassende 31 berühren kann. Durch die Berührung werden auf der Pipettenspitze 2 eventuell anwesende elektrostatische Ladungen auf das elektrisch leitfähige Pipettenspitzen-Kontaktstück 14 abgeleitet. Bevorzugt wird die zumindest teilweise elektrische Leitfähigkeit des Pipettenspitzen-Kontaktstücks 14 dadurch erreicht, dass es ein elektrisch leitfähiges Material umfasst oder ganz aus einem solchen Material hergestellt ist.

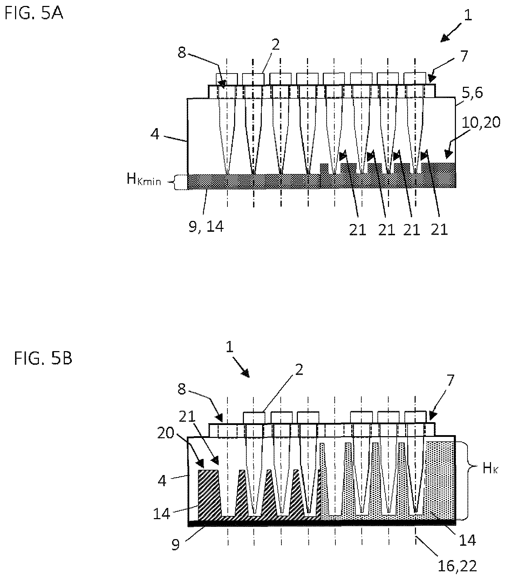

Das Pipettenspitzen-Kontaktstück 14 kann unterschiedlich ausgebildet sein. Beispielsweise kann es durch Längsstege 11 und/oder durch Querstege 12 gebildet sein, welche an der Unterseite 26 der Lagerbox 1 angeordnet sind und sich in Richtung der Oberseite 25 der Lagerbox 1 erstrecken (siehe beispielsweise Figuren 1 bis 4). Eingesetzte Pipettenspitzen 2 können dann vor allem die Innenseiten der Stege, die der jeweiligen Pipettenspitze 2 unmittelbar zugewandt sind, berühren. Alternativ kann das Pipettenspitzen-Kontaktstück 14 auch eher plattenförmig ausgebildet sein, wobei es in diesem Fall bevorzugt Aussparungen an der zur Trägerplatte hinzeigenden Oberfläche aufweist, in welche eingesetzte Pipettenspitzen 2 hineinragen können (siehe Figur 5).

In einer besonders vorteilhaften Ausführungsform der Lagerbox 1 wird das Pipettenspitzen-Kontaktstück 14 sowohl durch eine Vielzahl von Längsstegen 11 als auch durch eine Vielzahl von Querstegen 12 gebildet (siehe zum Beispiel Figuren 2A und 2B und Figuren 3A bis 3C). Bevorzugt erstrecken sich Längsstege 11 im Wesentlichen parallel zu den Längswänden 5 des Rahmenteils 4, und Querstege 12 erstrecken sich bevorzugt im Wesentlichen parallel zu den Querwänden 6 des Rahmenteils 4. Bevorzugt sind die Längsstege 11 und die Querstege 12 an der Unterseite 26 des Rahmenteils 4 angeordnet, und erstrecken sich nicht nur im Wesentlichen senkrecht zurTrägerplatte 7, sondern auch in Richtung der Trägerplatte 7 um jeweils eine Höhe H_{K}. Die Stege 11,12 sind so zueinander und zu derTrägerplatte 7 angeordnet, dass sie sich zwischen den Lageröffnungen 8 erstrecken und den Raum unterhalt einer Lageröffnung 8 für einzusetzende Pipettenspitzen 2 frei lassen. Sie beeinflussen damit nicht oder nicht wesentlich die Position einer eingesetzten Pipettenspitze 2.

Figur 1 zeigt eine beispielhafte Lagerbox 1 für Kunststoff-Pipettenspitzen 2. Gezeigt ist eine Lagerbox 1 mit optionalem Deckel 3. Das Pipettenspitzen-Kontaktstück 14 wird aus einer Vielzahl von Längsstegen 11 und Querstegen 12 gebildet. In dem Querschnitt sind beispielhaft die Querstege 12 gezeigt, während die Längsstege 11 nicht zu sehen sind. In der oberen Trägerplatte 7 sind acht Lageröffnungen 8 zum Lagern von Pipettenspitzen 2 gezeigt angeordnet. Jede Lageröffnung 8 durchdringt die Trägerplatte 7 vollständig, so dass eine Pipettenspitze 2 eingesetzt werden kann. In sieben der acht gezeigten Lageröffnungen 8 sind jeweils Pipettenspitzen 2 eingesetzt, die mittels eines umlaufenden Kragens in der Lageröffnung 8 gehalten werden. Aus Übersichtsgründen ist eine Lageröffnung 8 frei, also ohne eingesetzte Pipettenspitze 2, dargestellt.

Gezeigt ist für jede der Lageröffnungen 8 eine mediale Achse 16. Eine Lageröffnung 8 ist dabei beispielsweise als eine zylindrische Aussparung in derTrägerplatte 7 gezeigt. Die mediale Achse 16 bezeichnet hier eine Gerade, welche durch den Mittelpunkt der jeweiligen kreisförmigen Lageröffnung 8 und entlang ihrer als Linie gedachten Achse verläuft. Eine eingesetzte Pipettenspitze 2 richtet sich typischerweise entlang der medialen Achse 16 mit ihrer Längsachse aus, wobei der Durchmesser der kreisförmigen Lageröffnung 8 so gewählt ist, dass eine eingesetzte Pipettenspitze 2 mit etwas Spiel in der Lageröffnung 8 gelagert wird. Eine eingesetzte Pipettenspitze 2 wird also etwas in der Lageröffnung 8 und dem Rahmenteil 4 bewegt, wenn die ganze Lagerbox 1 bewegt wird. Es kann alternativ vorgesehen sein, statt einer Lageröffnung 8 mit kreisförmigen Durchmesser eine davon abweichende Form für die Lageröffnung 8 zu wählen, beispielsweise eine mehreckige Form - solange eine eingesetzte Pipettenspitze 2 mit Spiel in der Lageröffnung 8 gehalten wird.

Die elektrisch leitfähigen Stege 11,12 der Lagerbox 1 bilden in einfacher Art und Weise Kontaktbereiche für eingesetzte Pipettenspitzen 2. Da Pipettenspitzen 2 leicht beweglich in einer Lagerbox 1 eingesetzt sind, berühren sie zum Beispiel beim Transport der Lagerbox 1 oder beim Wiedereinsetzen in eine Lageröffnung 8 mit ihrem unteren Ende die an der Unterseite 26 des Rahmens angeordneten, elektrisch leitfähigen Stege 11,12. Beim Kontaktieren der Stege 11,12 kann die elektrostatische Ladung von einer Pipettenspitze 2 an die elektrisch leitfähig ausgebildeten Stege 11,12 abgeleitet oder zumindest umverteilt werden.

Werden als Pipettenspitzen-Kontaktstück 14 Längs- und Querstege 11,12 verwendet, sind diese bevorzugt so an der Unterseite 26 des Rahmenteils 4 und zueinander angeordnet, dass sie an der Unterseite 26 des Rahmenteils eine Anordnung von Aufnahmen 13 bilden. Es kann vorgesehen sein, dass jeweils eine Aufnahme 13 einer eingesetzten Pipettenspitze 2 zugeordnet ist. Sind die Lageröffnungen 8 in einem definierten Array in der Trägerplatte 7 angeordnet, kann die Anordnung der Aufnahmen 13 an der Unterseite 26 des Rahmenteils der Anordnung der Lageröffnungen 8 in der Trägerplatte 7 entsprechen. So ragt in jede Aufnahme 13 an der Unterseite 26 des Rahmenteils 4 das Auslassende 31 einer in die entsprechende Lageröffnung 8 eingesetzten Pipettenspitze 2. Eine mediale Achse 17 einer Aufnahme 13 kann im Wesentlichen auf der medialen Achse 16 der ihr zugeordneten Lageröffnung 8 liegen. Alternative Anordnungen werden zu den Figuren 3A bis 3C diskutiert.

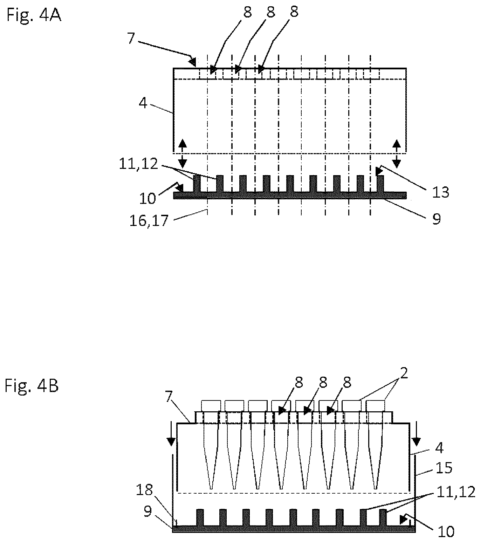

In Figur 1 sind die gezeigten, leitfähigen Querstege 12 beispielhaft mit verschiedenen Höhen H_{K} dargestellt. Es kann vorgesehen sein, dass die Längs- und/oder Querstege 11, 12 für eine Lagerbox 1 jeweils die gleiche Höhe H_{K} aufweisen (siehe Figuren 4A und B). Die Höhe H_{K} kann dabei auf die Länge der einzusetzenden Pipettenspitzen 2 angepasst sein, so dass für jede Lagerbox 1 eine spezifische Höhe H_{K} der Längs- und/oder Querstege gewählt werden kann. Es kann alternativ vorgesehen sein, dass für eine Lagerbox 1 die Längs- und/oder Querstege 11,12 verschieden hoch ausgebildet sind, so dass im Innenraum der Lagerbox 1 verschieden hohe Aufnahmen 13 gebildet werden. Diese Variante kann bevorzugt sein, wenn in einer Lagerbox 1 Pipettenspitzen 2 verschiedener Längen gelagert und angeboten werden sollen. Durch ein Abstimmen der Höhe H_{K} auf die Länge der zu verwendenden Pipettenspitzen 2 wird sichergestellt, dass jede eingesetzte Pipettenspitze 2 ein elektrisch leitfähiges Pipettenspitzen-Kontaktstück 14, also in diesem Fall einen elektrisch leitfähigen Steg 11, 12, berühren kann.

Die Höhe H_{K} kann beispielsweise so gewählt sein, dass sich das Pipettenspitzen-Kontaktstück 14 um zumindest ein Drittel und/oder um die Hälfte und/oder um zwei Drittel der Höhe des Rahmenteils 4 in Richtung der Trägerplatte 7 erstreckt.

Die vier Querstege 12, die am rechten Rand der Lagerbox 1 gezeigt sind, weisen eine maximale Höhe H_{Kmax} auf. Die maximale Höhe H_{Kmax} ist so gewählt, dass die Stege 11,12 nicht an die Unterseite der Trennplatte 7 anstossen. Die Längs- und/oder Querstege 11,12 haben somit keine Stützfunktion zum Stabilisieren derTrennplatte 7. Ein Pipettenspitzen-Kontaktstück 14 im Allgemeinen und die Längs- und/oder Querstege 12 im speziellen sind bevorzugt fürsolche, herkömmlichen Lagerboxen 1 geeignet, welche an der Unterseite derTrägerplatte 7 eigene Stabilisierungsstreben 30 besitzen (siehe auch Figur 2B).

Figur 2A zeigt eine besonders bevorzugte Ausführungsform der Lagerbox 1, bei welcher das Pipettenspitzen-Kontaktstück 14 aus einer Vielzahl von Längsstegen 11 und einer Vielzahl von Querstegen 12 gebildet ist. Die Längs- und Querstege 11,12 sind in diesem Fall auf einer optionalen Bodenplatte 9 angeordnet. Die Bodenplatte 9 ist an der Unterseite 26 des Rahmenteils 4 angeordnet und bildet den Boden der Lagerbox, während die Stege 11,12 die entsprechenden Aufnahmen 13 für in die Lagerbox 1 eingesetzte Pipettenspitzen 2 oberhalb der Bodenplatte 9 bilden. Eine solche mögliche untere Bodenplatte 9 erstreckt sich im Wesentlichen senkrecht zu den Längswänden 5 und den Querwänden 6 des Rahmenteils 4 und im Wesentlichen parallel zu der Trägerplatte 7. Ohne die optionale Bodenplatte 9 bildet jeweils die Unterseite des Pipettenspitzen-Kontaktstücks 14 den Boden der Lagerbox 1.

Eine Bodenplatte 9 kann insbesondere dann vorgesehen sein, wenn die elektrisch leitfähige Kontaktfläche von der Lagerbox 1 zu einer Arbeitsfläche, zum Beispiel zu einer metallischen Arbeitsfläche 24 einer Liquidhandling-Plattform 23 zusätzlich vergrössert werden soll; sie kann aber auch als Befestigungshilfe für das Pipettenspitzen-Kontaktstück 14 an die Lagerbox 1 oder zur dessen Stabilisierung dienen.

Besonders vorteilhaft wird eine erfindungsgemässe Lagerbox 1 im Zusammenhang mit Arbeiten auf einer metallischen Arbeitsoberfläche 24 verwendet, wie zum Beispiel im Rahmen von Arbeiten auf einer automatisierten Liquidhandling-Plattform 23, welche einen Arbeitstisch 24 mit einer metallischen Oberfläche aufweist. So können elektrostatische Ladungen von der Pipettenspitze 2 über die Lagerbox 1, also insbesondere über das Pipettenspitzen-Kontaktstück 14 und, wenn verwendet, der unteren Bodenplatte 9 auf die Arbeitsplatte 24 abgeleitet werden. Sind solche metallischen Arbeitsplatten geerdet, können elektrostatische Ladungen im Wesentlichen vollständig von den Einweg-Pipettenspitzen 9 über die Lagerbox 1 und die Arbeitsplatte an die Umgebung abgeleitet werden.

Werden beispielsweise Längs- und/oder Querstege 11,12 als Pipettenspitzen-Kontaktstück 14 verwendet, können ohne Verwendung einer optionalen Bodenplatte 9 die Unterkanten dieser Stege die Bodenfläche bzw. die Auflagefläche, mit welcher die Lagerbox 1 auf eine Arbeitsplatte positioniert wird, bilden. Durch die Verwendung jeweils einer Mehrzahl von elektrisch leitfähigen Längsstegen 11 und/oder Querstegen 12 wird eine relativ grosse Fläche bereitgestellt, auf welche elektrostatische Aufladungen von den Pipettenspitzen umverteilt werden können. Zudem bildet die Summe der Unterkanten der verwendeten Stege 11,12 eine relativ grosse Kontaktfläche zu einer Arbeitsplatte, über die elektrostatische Ladungen, die von Pipettenspitzen aufgenommen wurden, weiter an die Arbeitsplatte abgegeben werden können.

Mittels einer optionalen Bodenplatte 9 kann, insbesondere bei der Verwendung von Längs- und/oder Querstegen 11,12 als ein Pipettenspitzen-Kontaktstück 14, die Kontaktfläche zu einer (gegebenenfalls metallischen) Arbeitsfläche 24 vergrössert und damit eine noch bessere Ladungsableitung erzielt werden.

Wird alternativ ein plattenförmiges Pipettenspitzen-Kontaktstück 14 verwendet, wie beispielhaft in Figur 5A und 5B gezeigt, wird schon aufgrund der Form automatisch eine grössere Kontaktfläche zu einer Arbeitsoberfläche bereitgestellt. Eine zusätzliche Vergrösserung der Kontraktfläche durch eine Bodenplatte 9 ist für diese Variante an sich nicht notwendig. Nichts desto trotz kann auch hier eine Bodenplatte 9 vorgesehen sein, um beispielsweise die Befestigung des Pipettenspitzen-Kontaktstücks 14 an dem Rahmenteil 4 zu vereinfachen, oder um die Stabilität zu vergrössern.

In Figur 2A ist in einer räumlichen Darstellung eine Lagerbox 1 gezeigt, bei welcher das Pipettenspitzen-Kontaktstück 14 und die Bodenplatte 9 einstückig sind und als ein gemeinsames, separates, die Lagerbox 1 ansteckbares Bodenteil ausgebildet ist. Das Pipettenspitzen-Kontaktstück 14 wird durch eine Vielzahl von Längsstegen 11 und Querstegen 12 gebildet, welche so auf der Oberseite 10 der Bodenplatte 9 angeordnet sind, dass sie eine Vielzahl von Aufnahmen 13 bilden, in welche jeweils eine eingesteckte Pipettenspitze 2 zumindest mit ihrem unteren Auslassende 31 hineinragt. Das Rahmenteil 4 mit den Längs- und Querwänden 5,6 ist einstückig mit der oberen Trägerplatte 7 ausgebildet und von dem Pipettenspitzen-Kontaktstück 14 und der Bodenplatte 9 abgehoben gezeigt. Eine für die Lagerbox 1 geeignete Pipettenspitze 2 ist oberhalb einer der Lageröffnungen 8 gezeigt. Die Bodenplatte 9 mit den Längs- und Querstegen 11,12 können an der Unterseite 26 des Rahmenteils angebracht werden. Aus Übersichtsgründen sind die medialen Achsen 16 und 17 der Lageröffnungen 8 und der Aufnahmen 13 hier nicht gezeigt.

In der in Figur 2A gezeigten Ausführungsform der Lagerbox 1 weist jeder der Längsstege 11 und jeder der Querstege 12 eine gleiche Höhe H_{K} auf, so dass auch jede der von den Längsstegen 11 und den Querstegen 12 gebildete Aufnahme 13 die gleiche Höhe H aufweist. Die in Figur 2 gezeigte beispielhafte Lagerbox 1 ist zum Lagern von 384 Pipettenspitzen 2 ausgelegt; sie weist entsprechend 384 Lageröffnungen 8 für Kunststoff-Pipettenspitzen 2 auf. Die Anzahl an Längsstegen 11 und Querstegen 12, die auf der Bodenplatte 9 angeordnet sind, ist so gewählt, dass jede eingesetzte Pipettenspitze 2 in eine Aufnahme 13 hineinragt und dort zumindest einen der Längsstege 11 und einen der Querstege 12 kontaktieren kann. Ebenfalls mögliche Anzahlen und Anordnungen von Stegen ist in den Figuren 3A bis 3C gezeigt.

Die in Figur 2A gezeigte Lagerbox 1 ist für 384 125 µl-Pipettenspitzen 2 ausgelegt. Diese Pipettenspitzen 2 haben eine Länge von circa 54.8 mm. Die Lagerbox 1 selbst weist eine Höhe von 48 mm auf, mit einer Länge von 127.76 mm und einer Breite von 85.50 mm. Die Bodenplatte mit zwölf Längsstegen 11 und achtzehn Querstegen 12 weist eine Höhe von 21 mm auf, eine Länge von 125.65 mm und eine Breite von 83.40 mm. Die Anzahl und Anordnung der Längs- und Querstege 11,12 ist so gewählt, dass Steg-freie "Gassen" zwischen den Stegen gebildet werden. In diese Gassen können Stabilisierungsstreben 30, die von der Unterseite der Trägerplatte 7 aus sich in Richtung Unterseite 26 des Rahmenteils 4 erstrecken, hineinragen.

In Figur 2B sind derartige Stabilisierungsstreben 30 der Lagerbox 1 gezeigt. Solche Stabilisierungsstreben 30 können beispielsweise in regelmässigen Abständen an der Unterseite der Trägerplatte 7 angebracht sein und erstrecken sich durch den Innenraum des Rahmenteils 4 bis zur Bodenplatte 9. Sie dienen der Stabilisierung der Lagerbox 1, insbesondere der oberen Trägerplatte 7, wenn beispielsweise Pipettenspitzen 2 von einem Pipettierkopf 28 aus der Box aufgenommen werden. Ohne solche Stabilisierungsstreben 30 besteht die Gefahr, dass die Trägerplatte 7 aufgrund von des oben auf die Pipettenspitzen 2 drückenden Pipettierkopfes 28 eingedrückt oder anderweitig verformt würde. Die Verwendung eines erfindungsgemässen Pipettenspitzen-Kontaktstücks 14 mit einer Lagerbox 1, welche solche Stabilisierungsstreben bereits von sich aus umfasst, ist besonders bevorzugt, da nicht vorgesehen ist, dass das Pipettenspitzen-Kontaktstück 14 eine stabilisierende Funktion an der Trägerplatte 7 übernimmt. Entsprechend ist nicht vorgesehen, dass das Pipettenspitzen-Kontaktstück 14 sich von der Unterseite des Rahmenteils 4 bis an die Unterseite 26 der Trägerplatte 7 erstreckt und diese dort anstösst.

Die elektrische Leitfähigkeit des Pipettenspitzen-Kontaktstücks 14 kann beispielsweise erreicht werden, indem ein entsprechend geformtes Werkstück aus einem im Wesentlichen nicht-leitfähigen Kunststoff mit einem elektrisch leitfähigen Material beschichtet wird. Dies kann insbesondere dann vorgesehen sein, wenn beispielsweise Stege 11,12 als Pipettenspitzen-Kontaktstück vorgesehen sind. Alternativ oder zusätzlich kann das Pipettenspitzen-Kontaktstück 14 aus einem elektrisch leitfähigen Material hergestellt sein.

Geeignete Materialien für eine elektrisch leitfähige Beschichtung eines Pipettenspitzen-Kontaktstücks 14 sind zum Beispiel Graphitsprays (beispielsweise der Graphit 33 Lack der Firma CRC Industries Deutschland GmbH) oder metallische Beschichtungen durch metallische Folien beispielsweise aus Aluminium. Alternativ oder auch zusätzlich könnte auch das Kunststoff-Polymer mit leitfähigen Materialien wie Graphit versetzt sein. Geeignete, elektrisch leitfähige Materialien zur Herstellung von Pipettenspitzen-Kontaktstücken 14 sind beispielsweise graphithaltiges Polypropylen, oder auch graphithaltiges (Hart-)Gummi. Auch sind metallische Materialien zur Herstellung eines elektrisch leitfähigen Pipettenspitzen-Kontaktstücks 14 geeignet, wie beispielsweise Eisen-, Aluminium- oder Kupfer-Verbindungen.

Werden keine Stege 11,12 als Pipettenspitzen-Kontaktstück 14 sondern beispielsweise elektrisch leitfähige, plattenförmige Strukturen verwendet, wie in den Figuren 5A und 5B gezeigt, kann beispielsweise auch ein geschäumtes, graphithaltiges Kunststoffpolymer verwendet werden.

Auch die elektrische Leitfähigkeit der optionalen Bodenplatte 9 kann beispielsweise durch eine Beschichtung einer entsprechenden Kunststoffplatte mit einem elektrisch leitfähigen Material erreicht werden. Alternativ kann die Bodenplatte 9 teilweise oder bevorzugt vollständig aus einem elektrisch leitfähigen Material hergestellt sein.

Geeignete Materialien zur elektrisch leitfähigen Beschichtung einer Bodenplatte 9 sind beispielsweise ebenfalls Graphitsprays oder metallische Beschichtungen wie metallische Folien. Geeignete Materialien zum Herstellen elektrisch leitfähiger Bodenplatten 9 sind ebenfalls graphithaltige Polymere, geschäumt oder ungeschäumt, graphithaltiges Hartgummi, oder metallische Materialien wie zum Beispiel Aluminium-, Eisen-, oder Kupferverbindungen.

In den Figuren 3A bis 3C sind Lagerboxen 1 in einer Aufsicht auf die obere Trägerplatte 7 gezeigt. Zu sehen sind vor allem die Aussenseiten der Längs- und Querwände 5,6 des Rahmenteils 4 sowie die Lageröffnungen 8 in der oberen Trägerplatte 7. Die Längsstege 11 und/oder die Querstege 12 sind gestrichelt dargestellt, um zu zeigen, dass sie jeweils unterhalb der Trägerplatte 7 angeordnet sind.

In Figur 3A ist das Pipettenspitzen-Kontaktstück von einer Vielzahl von Längsstegen 11 und Querstegen 12 gebildet. Die Längsstege 11 erstrecken sich im Wesentlichen parallel zu den Längswänden 5 des Rahmenteils 4, und sind in definierten Abständen zueinander und zu den Längswänden 5 angeordnet. Die Querstege 12 erstrecken sich im Wesentlichen parallel zu den Querwänden 6 des Rahmenteils, und sind in definierten Abständen zueinander und zu den Querwänden 6 angeordnet. Längsstege 11 und Querstege 12 sind so im Innenraum des Rahmenteils 4 angeordnet, dass sie Aufnahmen 13 für eine oder mehrere Pipettenspitzen 2 bilden. Erfindungsgemäss sind die Stege 11,12 an der Unterseite 26 des Rahmenteils 4 angeordnet und erstrecken sich in dessen Innenraum um eine Höhe H_{K} in Richtung der Unterseite derTrägerplatte 7, so dass eine eingesetzte Pipettenspitze 2 zumindest mit ihrem Auslassende 31 einen der Stege 11,12 berühren kann, wenn beispielsweise die Trägerbox 1 bewegt wird. Aufgrund der Aufsicht ist die Höhe H_{K} der Stege 11,12 nicht zu erkennen.

Zumindest ein Teil der Längsstege 11 und der Querstege 12 sind elektrisch leitfähig ausgebildet. Bevorzugt ist jeder Längssteg 11 und jeder Quersteg 12 in dieser Ausführungsform elektrisch leitfähig ausgebildet, so dass jede in eine Lageröffnung 8 eingesetzte Pipettenspitze 2 einen elektrisch leitfähigen Längssteg 11 oder einen elektrisch leitfähigen Quersteg 12 kontaktieren kann.

Es kann vorgesehen sein, dass die Längsstege 11 und die Querstege 12 so angeordnet sind, dass sie eine Anordnung von Aufnahmen 13 bilden, welche der Anordnung der Lageröffnungen 8 in der Trägerplatte 7 entspricht. Jeder Lageröffnung 8 der Trägerplatte 7 wird also je eine Aufnahme 13 auf der Unterseite des Rahmenteils 4 zugeordnet. Eine solche Aufnahme 13, die einer Lageröffnung 8 zugeordnet ist, ist in Figur 3A durch ein fett umrandetes, schraffiertes Viereck der Anschauung halber hervorgehoben. Die Stege 11,12 verlaufen also bevorzugt zwischen den Lageröffnungen 8 und lassen den Raum unterhalb jeder Lageröffnung 8 für eine einzusetzende Pipettenspitze 2 frei.

Dargestellt sind ebenfalls die medialen Achsen 16 der einzelnen Lageröffnungen 8. Für ausgewählte Beispiele sind die, medialen Achsen 17 einer Lageröffnung 8 zugeordneten Aufnahme 13 ebenfalls dargestellt. In diesen Fällen liegt die mediale Achse 16 einer Lageröffnung 8 und die mediale Achse 17 einer dieser Lageröffnung 8 zugeordneten Aufnahme 13 auf einer gemeinsamen Geraden.

Es kann vorgesehen sein, dass die Längsstege 11 und Querstege 12 jeweils auch eine Art äussere Begrenzung der Aufnahmen 13 bilden. Dies ist für die linke Querseite 6 und für die untere Längsseite 5 der Lagerbox 1 in der Aufsicht aus Figur 3A gezeigt. Alternativ können die Aufnahmen 13 "offen" in Richtung der Innenseiten des Rahmenteils 4 verbleiben (siehe die gezeigten, äusseren Aufnahmen 13 in Richtung der oberen Längsseite 5 und der rechten Querseite 6).

Es kann ebenfalls vorgesehen sein, dass die Anzahl der Längsstege 11 und der Querstege 12 und deren Anordnung im Innenraum des Rahmenteils 4 derart gewählt sind, dass nicht nur unterhalb jeder Lageröffnung 8 in der Trägerplatte ein freier Raum (für die Enden von eingesetzten Pipettenspitzen 2) belassen wird, sondern dass ausserdem freier Raum für Stabilisierungsstreben 30, die von der Trägerplatte 7 aus in den Innenraum der Lagerbox 1 ragen, zwischen Lageröffnungen 8 gebildet wird. Dies wurde bereits im Zusammenhang mit Figur 2B erwähnt. In Figur 3A ist beispielhaft gezeigt, wie die regelmässige Anordnung von Querstegen 12 zwischen den vierten und fünften Lageröffnungen 8 von rechts und zwischen den vierten und fünften Lageröffnungen von oben unterbrochen ist, da an diesen Positionen kein Quer- bzw. Längssteg 12,11 angeordnet ist und so eine Gasse gebildet ist, in welche Stabilisierungsstreben 30 der Lagerbox 1 hineinragen können.

In Figur 3B ist eine beispielhafte Lagerbox 1 gezeigt, in welcher das Pipettenspitzen-Kontaktstück 14 von einer Vielzahl von Längsstegen 11 aber ohne Querstege 12 gebildet ist. In dieser Variante ist bevorzugt jeder Längssteg 11 elektrisch leitfähig ausgebildet. Jeder Längssteg 11 erstreckt sich im Wesentlichen parallel zu den Längswänden 5 im Innenraum des Rahmenteils 4 und senkrecht zu der Trägerplatte 7 um die Höhe H_{K} in Richtung derTrägerplatte 7. Die Anzahl der Längsstege ist bevorzugt so gewählt, dass jede in eine Lageröffnung 8 eingesetzte Pipettenspitze 2 zumindest einen der Längsstege 11 kontaktieren kann, wobei die Längsstege 11 zwischen den Lageröffnungen 8 angeordnet sind und den Raum unterhalb der Lageröffnungen 8 entlang der medialen Achse 16 für Pipettenspitzen 2 frei lassen. Auch kann die Anzahl und Anordnung der Längsstege 11, analog wie zu Figur 3A beschrieben, beispielsweise angepasst sein an die Anwesenheit von Stabilisierungsstreben 30, die sich ebenfalls in den Innenraum des Rahmenteils 4 erstrecken.

In Figur 3B sind verschiedene, mögliche Anordnungen von Längsstegen 11 beispielhaft gezeigt. Beispielsweise sind für die Lageröffnungen 8 der ersten, oberen Längsreihe jeweils nur ein Längssteg 11 vorgesehen, ebenso wie für die Lageröffnungen 8 der vierten und fünften Reihe von oben. Die Lageröffnungen 8 der Reihen 2,3, und 6 bis 8 (von oben in der Figur gesehen) werden dagegen jeweils von zwei Längsstegen 11 "flankiert". Die Gasse zwischen den Lageröffnungen zwischen der vierten und fünften Reihe von oben kann zur Aufnahme einer entsprechenden Stabilisierungsstrebe 30 dienen.

In Figur 3C ist eine beispielhafte Lagerbox 1 gezeigt, in welcher das Pipettenspitzen-Kontaktstück 14 von einer Vielzahl von Querstegen 12 aber ohne Längsstege 11 gebildet ist, welche elektrisch leitfähig ausgebildet sind. Bevorzugt ist auch hier die Anzahl von Querstegen 12, welche elektrisch leitfähig ausgebildet sind, und ihre Anordnung im Innenraum des Rahmenteils 4 derart gewählt, dass jede in eine der Lageröffnungen 8 eingesetzte Pipettenspitze 2 einen elektrisch leitfähigen (Quer-)steg kontaktieren kann, wenn beispielsweise die Lagerbox 1 bewegt wird. Die Querstege 12 erstrecken sich in diesem Fall im Wesentlichen parallel zu den Querwänden 5 des Rahmenteils 4. Zudem erstrecken sich die Querstege 12 senkrecht zu der Trägerplatte 7 um die Höhe H_{K} in Richtung derTrägerplatte 7.

Die Querstege 12 sind zwischen den Lageröffnungen 8 angeordnet und lassen dabei den Raum unterhalb der Lageröffnungen 8 entlang der medialen Achse 16 für Pipettenspitzen 2 frei. Auch für die Auswahl der Anzahl der verwendeten Querstreben 12 und deren Anordnung im Innenraum des Rahmenteils 4 gelten die gleichen Aussagen, die bereits im Zusammenhang mit den Figuren 3A und 3B getroffen wurden. So ermöglicht beispielsweise die Gasse zwischen den Lageröffnungen 8 der Reihen vier und fünf (von rechts aus gesehen), dass eine eventuell vorhandene Stabilisierungsstrebe 30 in dieser Gasse aufgenommen werden kann.

Bevorzugt weisen die Längsstege 11 in der Ausführungsform gemäss Figur 3B bzw. die Querstege 12 in einer Ausführungsform gemäss Figur 3C jeweils die gleiche Höhe H_{K} auf. Alternativ kann vorgesehen sein, dass die Höhe H_{K} der Längsstege 11 oder der Querstege 12 verschieden ist und an die Länge der zu verwendenden Pipettenspitzen 2 angepasst ist.

Bevorzugt ist, dass das Pipettenspitzen-Kontaktstück so ausgebildet ist, dass im normalen Handhabungsablauf einer Lagerbox 1 eine Kontaktierung jeder eingesetzten Pipettenspitze 2 mit dem Pipettenspitzen-Kontaktstück 14 möglich ist, um das Ableiten eventuell entstandener elektrostatischer Ladungen von der Pipettenspitze 2 an das Pipettenspitzen-Kontaktstück zu ermöglichen. Besonders bevorzugt sind Anzahl und Anordnung von Längsstegen 11 und/oder Querstegen 12 so gewählt, dass zu jeder in eine Lageröffnung 8 eingesetzten Pipettenspitze 2 zwei oder mehr Berührungsflächen durch die Stege bereitgestellt werden.

In den Figuren 4A und 4B sind verschiedene Varianten einer Lagerbox 1 mit einem Pipettenspitzen-Kontaktstück 14 und einer Bodenplatte 9 gezeigt. Das Pipettenspitzen-Kontaktstück 14 wird jeweils aus Längsstegen 11 und/oder Querstegen 12 gebildet, gezeigt ist aber in diesen Figuren jeweils nur ein Steg-Typ.

Figur 4A zeigt eine Variante einer Lagerbox 1, in welcher die Bodenplatte 9 einstückig mit den Längsstegen 11 und/oder den Querstegen 12 ausgebildet ist. Bevorzugt ist die Bodenplatte 9 mit allen das Pipettenspitzen-Kontaktstück-bildenden Stegen einstückig ausgebildet. Die Bodenplatte 9 mit den Stegen 11,12 ist mit der Unterseite des Rahmenteils 4 verbindbar. Die Verbindung kann beispielsweise durch Klemmen, durch Kleben oder durch eine Steckverbindung erfolgen (nicht gezeigt). Die Richtung, mit welcher das Rahmenteil 4 und die Bodenplatte 9 zueinander zum Verbinden bewegt werden, ist durch zwei Pfeile gekennzeichnet.

Figur 4B zeigt eine Variante einer Lagerbox 1, in welcher die Bodenplatte 9 und die Längsstege 11 und/oder Querstege 12 ebenfalls einstückig ausgebildet sind. In dieser Variante bilden die Bodenplatte 9 und die Stege 11,12 nicht unmittelbar den Boden der Lagerbox 1, sondern sie sind Teil eines von dem Rahmenteil 4 separaten Containers 15. Der Container 15 ist dabei in seinen Dimensionen so an das Rahmenteil 4 angepasst, dass das Rahmenteil 4 in den Container 15 einsetzbar ist. Der Container 15 dient damit der Aufnahme des Rahmenteils 4 mit der Trägerplatte 7. Die Einsetzrichtung ist durch zwei Pfeile gekennzeichnet. Für einen besseren Halt des Rahmenteils 4 in dem Container 15 kann vorgesehen sein, dass das Rahmenteil 4 zum Beispiel mittels einer Klemmverbindung oder einer Steckverbindung in dem Container 15 befestigt wird. Gezeigt sind in der Figur 4B beispielhaft Haltezapfen 18 an der Bodenplatte 9, mit welchen eine Steckverbindung mit dem Rahmenteil 4 hergestellt werden kann. Alternativ könnte das Rahmenteil 4 auch mit seinen Aussenseiten zwischen diese Haltezapfen 18 eingeklemmt werden.

Alternativ zu einer einstückigen Kombination aus Stegen 11,12 und Bodenplatte 9 kann vorgesehen sein, dass die Stege 11,12 separat von einer Bodenplatte 9 an das Rahmenteil 4 ansteckbar ausgebildet sind. Die optionale Bodenplatte 9 kann dann bei Bedarf zusätzlich an die Lagerbox 1 angebracht werden.

Der Vorteil der Varianten der Lagerboxen gemäss den Figuren 4A und 4B ist, dass herkömmliche Lagerboxen 1 verwendet werden können, die kommerziell erhältlich sind. Das Pipettenspitzen-Kontaktstück 14 und die optionale Bodenplatte 9 können dann spezifisch an die entsprechende Lagerbox 1 und die zu verwendenden Pipettenspitzen 2 angepasst werden.

Da typischerweise Lagerboxen 1 zusammen mit den jeweiligen Pipettenspitzen 2 vertrieben werden (bspw. Robotikspitzen blackKnights, 200 µl, Artikel-Nr. 49002-0007 und Tip Box für 50 µ und 200 µl, Artikel-Nr. 45009-3000; beides Ritter Medical, Ritter GmbH, 86830 Schwabmünchen, Deutschland), kann ein erfindungsgemässes Pipettenspitzen-Kontaktstück 14 an die gewünschte Lagerbox 1 entsprechend angepasst werden, indem beispielsweise herkömmliche, nicht-leitfähige Bodenteile durch ein leitfähiges Pipettenspitzen-Kontaktstück ersetzt werden.

Das elektrisch leitfähige Pipettenspitzen-Kontaktstück 14 zum Ableiten eventuell vorhandener, elektrostatischer Aufladungen auf Kunststoff-Pipettenspitzen 2 ist damit bevorzugt eine zum Rahmenteil 4 und Trägerplatte 7 der Lagerbox 1 separate Struktur, welche zusätzlich mit der Lagerbox 1 verbunden wird.

In den Figuren 5A und 5B ist jeweils eine Lagerbox 1 mit alternativ ausgebildeten Pipettenspitzen-Kontaktstücken 14 gezeigt. In diesen Varianten wird das Pipettenspitzen-Kontaktstück 14 von einer elektrisch leitfähigen Kontaktplatte gebildet, welche an der Unterseite 26 des Rahmenteils 4 angeordnet ist.

In Figur 5A ist eine Lagerbox 1 gezeigt, welche nicht die optionale Bodenplatte 9 umfasst. In dieser Lagerbox 1 ist es vorgesehen, dass das plattenförmige Pipettenspitzen-Kontaktstück 14 selbst den Boden der Lagerbox 1 an der Unterseite 26 des Rahmenteils 4 bildet. Bevorzugt besteht die elektrisch leitfähige Kontaktplatte in diesem Fall aus einem formstabilen Material, so dass sich auch ohne Bodenplatte 9 eine genügend hohe Stabilität für das Pipettenspitzen-Kontaktstück 14 ergibt, um einen Boden der Lagerbox 1 zu bilden. Die Plattenform stellt zudem eine zufriedenstellend grosse Kontaktfläche zum Ableiten elektrostatischer Ladungen von eingesetzten Kunststoff-Pipettenspitzen auf eine Arbeitsfläche 24 bereit.

Wird bevorzugt, auch für eine Kontaktplatte eine Bodenplatte 9 vorzusehen, sind diese bevorzugt mittels einer Steckverbindung oder einer Klebverbindung mit der Bodenplatte 9 verbindbar. Alternativ kann das Pipettenspitzen-Kontaktstück 14 einstückig mit einer Bodenplatte 9 ausgebildet und so an das Rahmenteil 4 ansteckbar sein.

Geeignete Materialen für elektrisch leitfähige Kontaktplatten sind beispielsweise Schaumstoffe, bevorzugt halbharte oder harte Schaumstoffe, oder auch elektrisch leitfähiges Gummi, wie beispielsweise leitfähige Elastomere wie Silikone (SRE-WxH-C der Firma Micro Tech Components GmbH, Deutschland).

In Figur 5A ist das Pipettenspitzen-Kontaktstück 14 auf der linken Seite anders ausgebildet gezeigt als auf der rechten Seite, wobei es generell aus dem gleichen Material bestehend gezeigt ist. Das als elektrisch leitfähige Kontaktplatte ausgebildete Pipettenspitzen-Kontaktstück 14 auf der linken Seite weist eine Mindest-Höhe H_{Kmin} auf, die notwendig ist, um sicherzustellen, dass eine eingesetzte Pipettenspitze 2 im normalen Gebrauch der Lagerbox 1 tatsächlich das Pipettenspitzen-Kontaktstück 14 genügend berührt, um potentiell vorhandene elektrostatische Ladungen abzuleiten, und möglichst ohne den Sitz einer eingesetzten Pipettenspitze 2 zu beeinträchtigen. Diese Mindest-Höhe H_{Kmin} ist dabei nicht nur abhängig von der Länge der zu lagernden Pipettenspitze 2 sondern ebenfalls von der Art des Materials der Kontaktplatte.

Besonders bevorzugt umfasst ein als Kontaktplatte ausgebildetes Pipettenspitzen-Kontaktstück 14 an seiner Oberseite 20, also an seiner der Trägerplatte 7 zugewandten Seite, eine Anordnung von Vertiefungen 21, welche der Anordnung der Lageröffnungen 8 in der Trägerplatte 7 entspricht. Besonders bevorzugt ist jeder Lageröffnung 8 in der Trägerplatte 7 je eine Vertiefung 21 auf der Oberseite 10 der Kontaktplatte zugeordnet.

Damit kann in jede Vertiefung 21 jeweils eine in eine der Vertiefung 21 zugeordneten Lageröffnung 8 eingesetzte Pipettenspitze 2 hineinragen.

Eine solche Lagerbox 1 mit als Kontaktplatten ausgebildeten Pipettenspitzen-Kontaktstücken 14 und mit in die Oberseite 20 der Kontaktplatte angeordneten Vertiefungen 21 ist ebenfalls in Figur 5B gezeigt. Hier ist jeweils die Kontaktplatte auf einer Bodenplatte 9 angeordnet. Die Bodenplatte 9 dient also auch der Befestigung der Kontaktplatte an dem Rahmenteil 4. Zusätzlich kann eine solche Bodenplatte 9 aber auch die Stabilität erhöhen, wenn zum Beispiel die Kontaktplatte aus einem weniger formstabilen, elektrisch leitfähigen Material besteht, wie zum Beispiel aus einem entsprechend weichen Schaumstoff. In Figur 5B ist eine Lagerbox 1 gezeigt, bei welcher die Kontaktplatte auf der linken Seite aus einem anderen Material hergestellt ist als die Kontaktplatte auf der rechten Seite. Dies ist durch die verschiedenen Schraffierungen der Kontaktplatten bzw. der Pipettenspitzen-Kontaktstücke 14 angedeutet.

Zudem zeigt Figur 5B auf der linken Seite und der rechten Seite der Lagerbox 1 beispielhaft Pipettenspitzen-Kontaktstücke 14 verschiedener Höhen H_{K}. Entsprechend sind auch die Vertiefungen 21 an der Oberseite 20 der Kontaktplatten verschieden tief ausgebildet. Weiter zeigt Figur 5B, dass in diesem Fall die Vertiefungen 21 in der Kontaktplatte in ihrer Form zusätzlich etwas mehr an die Form der einzusetzenden Pipettenspitzen 2 angepasst ist. Besonders bevorzugt ist, dass eine mediale Achse 22 einer Vertiefung 21 auf der Oberseite der Kontaktplatte entlang der medialen Achse 16 der dieser Vertiefung 21 zugeordneten Lageröffnung 8 verläuft. Der Raum unterhalb jeder Lageröffnung 8 wird somit für eine einzusetzende Pipettenspitze 2 frei gehalten.

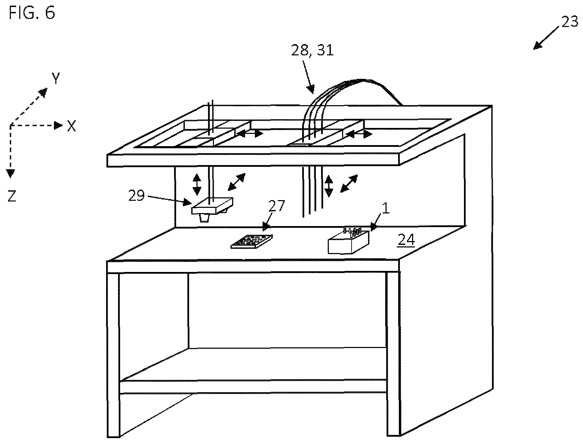

Figur 6 zeigt in einer stark schematisierten Übersicht eine beispielhafte Liquidhandling-Plattform 23 mit einer Arbeitsfläche 24 und darauf positionierter Lagerbox 1 und Mikroplatte 27. Die Arbeitsfläche 24 kann geerdet sein, um elektrostatische Ladungen von der Lagerbox 1 über die Arbeitsfläche 24 an die Umgebung abzuleiten. Die Liquidhanding-Plattform 23 umfasst beispielhaft einen Robotergreifer 29, mit welchem Gegenstände in der Liquidhandling-Plattform 23 umpositioniert werden können, beispielsweise im Rahmen einer Verwendung und/oder eines Verfahrens mit der erfindungsgemässen Lagerbox 1. Der Robotergreifer 29 ist vorzugsweise bewegbar ausgebildet (angedeutet durch entsprechende Pfeile), insbesondere entlang einer X-Achse und/oder einer Y-Achse und/oder einer Z-Achse eines kartesischen Koordinatensystems (siehe gestricheltes Pfeildiagramm).

Gezeigt ist des Weiteren ein Pipettierkopf 28 der Liquidhandling-Plattform 23, für welchen in diesem Fall beispielhaft vier Pipetten gezeigt sind. Ein Pipettierkopf 28 kann als ein Einkanal-Pipettierkopf oder als ein Mehrkanal-Pipettierkopf ausgebildet sein, er kann also eine oder eine Mehrzahl von Pipetten umfassen. Möglich sind beispielsweise auch acht, zwölf oder sechsundneunzig Pipetten. Vorzugsweise ist der Pipettierkopf 28 bewegbar, wie es in durch entsprechende Pfeile angedeutet ist. Besonders bevorzugt ist der Pipettierkopf 28 mit den Pipetten zumindest entlang der X-Achse und/oder Y-Achse eines kartesischen Koordinatensystems bewegbar. Alternativ oder zusätzlich können die Pipetten höhenverstellbar sein, wobei dazu vorgesehen sein kann, dass die Pipetten selbst entlang der Z-Achse eines kartesischen Koordinatensystems bewegbar sind, und/oder die Höhenverstellbarkeit wird über eine entsprechende Bewegbarkeit des Pipettierkopfes 28 erzielt.

In einem Verfahren zum Ableiten elektrostatischer Ladungen von Pipettenspitzen 2 aus Kunststoff wird erfindungsgemäss eine zuvor beschriebene Lagerbox 1 bereitgestellt.

Dabei kann die Lagerbox 1 eine Kombination der oben beschriebenen einzelnen Merkmale umfassen, welche ein Fachmann derart ausgewählt hat, dass eine für die zu verwendenden Pipettenspitzen 2 und die durchzuführenden Schritte eines gewünschten Arbeitsprozesses besonders vorteilhaft ausgebildete Lagerbox 1 bereitgestellt wird.

Die zu verwendenden Pipettenspitzen 2 werden in die Lagerbox 1 eingesetzt, und die Lagerbox 1 wird im Rahmen des Arbeitsprozesses bewegt. Durch die Bewegung der Lagerbox 1 bewegen sich auch die in die Lagerbox 1 eingesetzten Pipettenspitzen 2, und berühren dabei das Pipettenspitzen-Kontaktstück 14 in der Lagerbox 1. Während dieses Berührens können dann eventuell vorhandene elektrostatische Ladungen auf das elektrisch leitfähige Pipettenspitzen-Kontaktstück 14 übergehen. Sobald die Lagerbox 1 zum Beispiel auf einer metallischen Oberfläche 24 einer Liquidhandling-Plattform oder einer anderen leitfähigen Arbeitsoberfläche abgestellt wird, geht dann die Ladung von dem Pipettenspitzen-Kontaktstück 14 auf diese Oberfläche über. Umfasst die Lagerbox 1 eine elektrisch leitfähige Bodenplatte 9, geht die Ladung entsprechend von dem Pipettenspitzen-Kontaktstück 14 zunächst auf die Bodenplatte 9 über und dann von der Bodenplatte 9 auf die entsprechende Arbeitsoberfläche 24. Zudem kann vorgesehen sein, die Arbeitsoberfläche 24 mit einer Erdung zu verbinden, so dass die elektrostatischen Ladungen vollständig abgeleitet werden können.

Bewegungen der Lagerbox 1, die im Rahmen eines Arbeitsprozesses durchgeführt werden, welche bereits zum Ableiten elektrostatischer Ladungen von den eingesetzten Pipettenspitzen 2 führen können, sind beispielsweise das Umpositionieren der Lagerbox 1 in einer Liquidhandling-Plattform 23. Das Umpositionieren kann beispielsweise von Hand durch einen Benutzer oder mittels eines Robotergreifers 29 (siehe auch Figur 6) durchgeführt werden.

Eine weitere Bewegung, welche zum Ableiten elektrostatischer Ladungen von Pipettenspitzen 2 führen kann, ist beispielsweise das Einsetzen bereits aufgenommener Pipettenspitzen 2 von einer Pipette eines Pipettierkopfes 28 in eine freie Lageröffnung 8 der Lagerbox 1. So können elektrostatische Ladungen, die beispielsweise bei dem Aufsetzen einer Pipettenspitze 2 auf eine Pipette entstehen, durch das Wiedereinsetzen in die Lagerbox 1 oder in eine andere, erfindungsgemässe Lagerbox 1 abgeleitet werden.

Bevorzugt wird für das Wiedereinsetzen einer Pipettenspitze 2 in die Lagerbox 1 ein Abwerfmechanismus 31 der Liquidhandling-Plattform 23 verwendet, mit welchem Pipettenspitzen 2 automatisiert von der oder den Pipette(n) abgeschoben werden können.

Zum Ableiten von elektrostatischen Ladungen von einer Pipettenspitze 2, die zuvor auf eine Pipette der Liquidhandling-Plattform 23 aufgesetzt wurde, kann bevorzugt sein, dass die Pipettenspitze 2 zunächst von dieser Pipette zumindest bis zur Hälfte ihrer Länge in eine Lageröffnung 8 eingeführt wird, und dann beispielsweise mittels eines Abwerfmechanismus 31 von der jeweiligen Pipette abgeschoben wird. Auf diese Weise fällt die jeweilige Pipettenspitze 2 für ihre restliche Länge frei in die Lagerbox 1 hinein, und kann so durch ihre Eigenbewegung von sich aus das Pipettenspitzen-Kontaktstück 14 kontaktieren, ohne dass sie wieder aus der Lagerbox 1 hinausfällt.

Unter Ableiten von elektrostatischen Ladungen wird im Zusammenhang mit der vorliegenden Erfindung sowohl das Umverteilen von aus Kunststoff-Pipettenspitzen 2 vorhandenen, elektrostatischen Ladungen auf das elektrisch leitfähige Pipettenspitzen-Kontaktstück 14 der Lagerbox 1, und, falls eine elektrisch leitfähige Bodenplatte 9 vorhanden ist, auch auf diese Bodenplatte 9 verstanden. Ebenso können elektrostatische Ladungen nicht nur auf elektrisch leitfähige Teile der Lagerbox 1 umverteilt werden, sondern zusätzlich durch eine verbundene Erdung auch von der Lagerbox 1 abgeführt werden.

Durch die entsprechende Verwendung einer erfindungsgemässen Lagerbox 1, zum Beispiel im Rahmen von Arbeitsprozessen auf automatisierten Liquidhandling-Plattformen, können unbeabsichtigte Unterbrüche im Arbeitsprozess, die durch ungewollte elektrostatische Aufladungen von Einweg-Pipettenspitzen 2 entstehen, vermieden oder sogar ganz verhindert werden.

Verfahrensschritte, welche mit der Liquidhandling-Plattform 23 durchgeführt werden können, sind bevorzugt ausgewählt aus einer Gruppe, welche ein Aspirieren einer Flüssigkeit und ein Dispensieren einer Flüssigkeit umfasst. Unter Aspirieren wird dabei das Ansaugen einer Flüssigkeit in die Pipettenspitze 2 und unter Dispensieren das Abgeben einer Flüssigkeit aus der Pipettenspitze 2 verstanden. Die Flüssigkeit kann eine einzelne Flüssigkeit, ein Gemisch aus verschiedenen Flüssigkeiten, oder ein Flüssigkeit/Gas- Gemisch sein. Die Flüssigkeit kann zudem Partikel enthalten.

### Bezugszeichenliste:

- 1: Lagerbox für Pipettenspitzen
- 2: Pipettenspitze
- 3: Deckel
- 4: Rahmenteil
- 5: Längswand des Rahmenteils
- 6: Querwand des Rahmenteils
- 7: Trägerplatte
- 8: Lageröffnung
- 9: Bodenplatte
- 10: Oberseite der Bodenplatte
- 11: Längssteg
- 12: Quersteg
- 13: Aufnahme
- 14: Pipettenspitzen-Kontaktstück
- 15: Container
- 16: mediale Achse der Lageröffnung 8
- 17: mediale Achse der Aufnahme 13
- 18: Haltezapfen
- 19: Unterseite der Bodenplatte
- 20: Oberseite des Pipettenspitzen-Kontaktstücks
- 21: Vertiefung an 20
- 22: mediale Achse von 21
- 23: Liquidhandling-Plattform
- 24: Arbeitsfläche der Liquidhandling-Plattform
- 25: Oberseite des Rahmenteils
- 26: Unterseite des Rahmenteils
- 27: Mikroplatte
- 28: Pipettierkopf
- 29: Robotergreifer
- 30: Stabilisierungsstreben
- 31: Abwerfmechanismus

- H_{K}: Höhe des Pipettenspitzen-Kontaktstücks
- H_{Kmin}: Mindesthöhe des Pipettenspitzen-Kontaktstücks
- H_{Kmax}: Maximalhöhe des Pipettenspitzen-Kontaktstücks

## Patentansprüche

1. Lagerbox (1) zum Lagern von Kunststoff-Pipettenspitzen (2), welche umfasst:
- ein elektrisch nicht-leitfähiges Rahmenteil (4), welches aus zwei Längswänden (5) und zwei Querwänden (6) gebildet ist, wobei die Längswände (5) und die Querwände (6) einen Innenraum seitlich umschliessen und an einer Oberseite (25) des Rahmenteils (4) eine erste Öffnung und an einer Unterseite (26) des Rahmenteils (4) eine zweite Öffnung frei lassen,
- eine elektrisch nicht-leitfähige Trägerplatte (7) für Kunststoff-Pipettenspitzen (2), welche mit der Oberseite (25) des Rahmenteils (4) verbundenen ist und die erste Öffnung im Wesentlichen abdeckt, wobei die Trägerplatte (7) eine Vielzahl von Lageröffnungen (8) zum Einsetzen von Kunststoff-Pipettenspitzen (2) umfasst;
**dadurch gekennzeichnet, dass**
die Lagerbox (1) ein an der Unterseite (26) des Rahmenteils (4) angeordnetes und sich parallel zur Trägerplatte (7) erstreckendes, elektrisch leitfähiges Pipettenspitzen-Kontaktstück (14) umfasst, welches sich zum Kontaktieren zumindest einer in eine der Lageröffnungen (8) eingesetzten Kunststoff-Pipettenspitze (2) um eine Höhe H_{K} zudem in Richtung der oberen Trägerplatte (7) erstreckt.

2. Lagerbox (1) nach Anspruch 1, **dadurch gekennzeichnet, dass** das Pipettenspitzen-Kontaktstück (14) von einer Vielzahl von Längsstegen (11) und/oder einer Vielzahl von Querstegen (12) gebildet ist, welche elektrisch leitfähig sind, wobei sich jeder Längssteg (11) im Wesentlichen parallel zu den Längswänden (5) des Rahmenteils (4) und um eine Höhe H_{K} von der Unterseite (26) ausgehend in Richtung der Trägerplatte (7) erstreckt, und wobei sich jeder Quersteg (12) im Wesentlichen parallel zu den Querwänden (6) des Rahmenteils (4) und um die Höhe H_{K} von der Unterseite (26) ausgehend in Richtung der Trägerplatte (7) erstreckt, so dass eine in eine Lageröffnung (8) eingesetzte Pipettenspitze (2) von einem der Längsstege (11) oder von einem der Querstege (12) kontaktierbar ist.

3. Lagerbox (1) nach Anspruch 2, **dadurch gekennzeichnet, dass** das Pipettenspitzen-Kontaktstück (14) von einer Vielzahl von Längsstegen (11) und Querstegen (12) gebildet ist.

4. Lagerbox (1) nach Anspruch 3, **dadurch gekennzeichnet, dass** jeder Längssteg (11) und jeder Quersteg (12) elektrisch leitfähig ist.

5. Lagerbox (1) nach Anspruch 3 oder 4, **dadurch gekennzeichnet, dass** die Längsstege (11) und Querstege (12) so im Innenraum des Rahmenteils (4) angeordnet sind, dass sie eine Anordnung von Aufnahmen (13) für in die Trägerplatte (7) eingesetzte Kunststoff-Pipettenspitzen (2) bilden.

6. Lagerbox (1) nach Anspruch 5, **dadurch gekennzeichnet, dass** jeder Aufnahme (13) eine oder eine Mehrzahl von Lageröffnungen (8) in der Trägerplatte (7) zugeordnet ist.

7. Lagerbox (1) nach einem der vorhergehenden Ansprüche, **dadurch gekennzeichnet, dass** die Lagerbox (1) zudem umfasst:
- eine untere Bodenplatte (9), welche an der Unterseite (26) des Rahmenteils (4) und parallel zu derTrägerplatte (7) angeordnet ist, wobei die Bodenplatte (9) eine derTrägerplatte (7) zugewandten Oberseite (10) und eine dieser gegenüberliegenden Unterseite (19) umfasst,
wobei die Bodenplatte (9) zum Aufnehmen und/oder Ableiten von elektrostatischen Ladungen elektrisch leitfähig ist, und
wobei das Pipettenspitzen-Kontaktstück (14) auf der Oberseite (10) der Bodenplatte (9) angeordnet ist.

8. Lagerbox (1) nach Anspruch 7, **dadurch gekennzeichnet, dass** die Bodenplatte (9) einstückig mit den Längsstegen (11) und/oder den Querstegen (12) ausgebildet ist und mit der Unterseite des Rahmenteils (4) verbindbar ist.

9. Lagerbox (1) nach Anspruch 7, **dadurch gekennzeichnet, dass** die Bodenplatte (9) und die Längsstege (11) und/oder Querstege (12) einstückig ausgebildet sind und von einem von dem Rahmenteil (4) separaten Container (15) bereitgestellt wird, wobei der Container (15) in seinen Dimensionen so an das Rahmenteil (4) angepasst ist, dass das Rahmenteil (4) in den Container (15) einsetzbar ist.

10. Lagerbox (1) nach einem der Ansprüche 2 bis 9, **dadurch gekennzeichnet, dass** die Längsstege (11) und/oder die Querstege (12) mit einem elektrisch leitfähigen Material beschichtet sind oder aus einem elektrisch leitfähigem Material hergestellt sind.

11. Lagerbox (1) nach Anspruch 1, **dadurch gekennzeichnet, dass** das Pipettenspitzen-Kontaktstück (14) eine elektrisch leitfähige Kontaktplatte ist, welche an der Unterseite (26) des Rahmenteils (4) angeordnet ist.

12. Lagerbox (1) nach Anspruch 11, **dadurch gekennzeichnet, dass** die elektrisch leitfähige Kontaktplatte eine Platte aus elektrisch leitfähigem Schaumstoff, bevorzugt aus halbharten, elektrisch leitfähigem Schaumstoff, oder eine Platte aus einem elektrisch leitfähigen Gummi ist.

13. Lagerbox (1) nach Anspruch 11 oder 12, **dadurch gekennzeichnet, dass** das Pipettenspitzen-Kontaktstück (14) eine der Trägerplatte (7) zugewandte Oberseite (20) umfasst, sowie an ihrer Oberseite (20) eine Anordnung von Vertiefungen (21) zur Aufnahme einer oder mehrerer Pipettenspitzen (2).

14. Lagerbox (1) nach Anspruch 13, **dadurch gekennzeichnet, dass** jeder Lageröffnung (8) der Trägerplatte (7) je eine Vertiefung (21) auf der Oberseite (10) des Pipettenspitzen-Kontaktstücks (14) zugeordnet ist.

15. Lagerbox (1) nach einem der Ansprüche 11 bis 14, **dadurch gekennzeichnet, dass** sie zudem umfasst:
- eine untere Bodenplatte (9), welche an der Unterseite (26) des Rahmenteils (4) und parallel zu derTrägerplatte (7) angeordnet ist, wobei die Bodenplatte (9) eine der Trägerplatte (7) zugewandten Oberseite (10) und eine dieser gegenüberliegenden Unterseite (19) umfasst,
wobei die Bodenplatte (9) zum Aufnehmen und Ableiten von elektrostatischen Ladungen elektrisch leitfähig ist, und
wobei die elektrisch leitfähige Kontaktplatte auf der Oberseite (10) der Bodenplatte (9) angeordnet ist.

16. Lagerbox (1) nach einem der Ansprüche 7 bis 10 oder 15, **dadurch gekennzeichnet, dass** das elektrisch leitfähige Material der Bodenplatte (9) durch eine Beschichtung der Bodenplatte (9) bereitgestellt wird, **oder dass** die Bodenplatte (9) aus einem elektrisch leitfähigen Material hergestellt ist.

17. Verfahren zum Ableiten elektrostatischer Ladungen von einer Pipettenspitze (2) aus Kunststoff, welches umfasst:
- Bereitstellen zumindest einer Lagerbox (1) gemäss einem der Ansprüche 1 bis 16 mit einer eingesetzten Pipettenspitze (2) aus Kunststoff, und
- Bewegen der Lagerbox (1) mit der eingesetzten Pipettenspitze (2).

18. Verfahren nach Anspruch 17, **dadurch gekennzeichnet, dass** die Lagerbox (1) mittels eines Robotergreifers (29) einer Liquidhandling-Plattform (23) umpositioniert und dadurch bewegt wird, wobei durch das Bewegen der Lagerbox (1) die eingesetzte Pipettenspitze (2) bewegt wird und so mit Ihrem Auslassende (31) das Pipettenspitzen-Kontaktstück (14) kontaktiert.

19. Verfahren nach Anspruch 18, **dadurch gekennzeichnet, dass** die Lagerbox (1) auf einer elektrisch leitfähigen Arbeitsfläche (24) der Liquidhandling-Plattform (23) umpositioniert wird, welche optional geerdet ist.

20. Verfahren nach einem der Ansprüche 17 bis 19, **dadurch gekennzeichnet, dass** zumindest eine Pipettenspitze (2) der Lagerbox (1) auf eine Pipette einer Liquidhandling-Plattform (23) aufgesetzt wird, und anschliessend in eine freie Lageröffnung (8) dieser Lagerbox (1) oder einer anderen Lagerbox (1) eingesetzt wird.

21. Verfahren nach Anspruch 20, **dadurch gekennzeichnet, dass** zwischen dem Aufsetzen der Pipettenspitze (2) auf eine Pipette und dem Einsetzen der Pipettenspitze (2) in eine Lagerbox (1) zumindest ein Verfahrensschritt mit der Liquidhandling-Plattform (23) durchgeführt wird, welcher ausgewählt ist aus einer Gruppe, welche umfasst:
- ein Aspirieren einer Flüssigkeit, und
- ein Dispensieren einer Flüssigkeit.

## Claims

1. Storage box (1) for storing plastic pipette tips (2), which comprises:
- an electrically non-conductive frame part (4) which is formed from two longitudinal walls (5) and two transverse walls (6), wherein the longitudinal walls (5) and the transverse walls (6) laterally enclose an interior space and leave open a first opening on an upper side (25) of the frame part (4) and a second opening on an underside (26) of the frame part (4),
- an electrically non-conductive support plate (7) for plastic pipette tips (2), which is connected to the upper side (25) of the frame part (4) and substantially covers the first opening,
wherein the support plate (7) comprises a plurality of storage openings (8) for inserting plastic pipette tips (2);
**characterized in that**
the storage box (1) comprises an electrically conductive pipette tip contact piece (14) which is arranged on the underside (26) of the frame part (4), which extends parallel to the support plate (7) and which, for contacting at least one plastic pipette tip (2) inserted into one of the storage openings (8), in addition extends by a height H_{K} in the direction of the upper support plate (7).

2. Storage box (1) according to claim 1, **characterized in that** the pipette tip contact piece (14) is formed by a plurality of longitudinal webs (11) and/or a plurality of transverse webs (12) which are electrically conductive, wherein each longitudinal web (11) extends substantially parallel to the longitudinal walls (5) of the frame part (4) and by a height H_{K} starting from the underside (26) in the direction of the support plate (7), and wherein each transverse web (12) extends substantially parallel to the transverse walls (6) of the frame part (4) and by the height H_{K} starting from the underside (26) in the direction of the support plate (7), so that a pipette tip (2) inserted into a storage opening (8) can be contacted by one of the longitudinal webs (11) or by one of the transverse webs (12).

3. Storage box (1) according to claim 2, **characterized in that** the pipette tip contact piece (14) is formed by a plurality of longitudinal webs (11) and transverse webs (12).

4. Storage box (1) according to claim 3, **characterized in that** each longitudinal web (11) and each transverse web (12) is electrically conductive.

5. Storage box (1) according to claim 3 or 4, **characterized in that** the longitudinal webs (11) and transverse webs (12) are arranged in the interior space of the frame part (4) in such a way that they form an array of receptacles (13) for plastic pipette tips (2) inserted into the support plate (7).

6. Storage box (1) according to claim 5, **characterized in that** each receptacle (13) is assigned to one or a plurality of storage openings (8) in the support plate (7).

7. Storage box (1) according to one of the preceding claims, **characterized in that** the storage box (1) further comprises:
- a lower base plate (9) which is arranged on the underside (26) of the frame part (4) and parallel to the support plate (7), wherein the base plate (9) comprises an upper side (10) facing the support plate (7) and an underside (19) opposite the said upper side,
wherein the base plate (9) is electrically conductive for receiving and/or dissipating electrostatic charges, and
wherein the pipette tip contact piece (14) is arranged on the upper side (10) of the base plate (9).

8. Storage box (1) according to claim 7, **characterized in that** the base plate (9) is integrally formed with the longitudinal webs (11) and/or the transverse webs (12) and is connectable to the underside of the frame part (4).

9. Storage box (1) according to claim 7, **characterized in that** the base plate (9) and the longitudinal webs (11) and/or transverse webs (12) are integrally formed and are provided by a container (15) which is separate from the frame part (4), wherein the dimensions of the container (15) are adapted to the frame part (4) in such a way that the frame part (4) is insertable into the container (15).

10. Storage box (1) according to one of claims 2 to 9, **characterized in that** the longitudinal webs (11) and/or the transverse webs (12) are coated with an electrically conductive material or are produced from an electrically conductive material.

11. Storage box (1) according to claim 1, **characterized in that** the pipette tip contact piece (14) is an electrically conductive contact plate which is arranged on the underside (26) of the frame part (4).

12. Storage box (1) according to claim 11, **characterized in that** the electrically conductive contact plate is a plate of electrically conductive foam material, preferably of a semi-rigid, electrically conductive foam material, or is a plate made of an electrically conductive rubber.

13. Storage box (1) according to claim 11 or 12, **characterized in that** the pipette tip contact piece (14) comprises an upper side (20) facing the support plate (7) and, on its upper side (20), an array of recesses (21) for receiving one or more pipette tips (2).

14. Storage box (1) according to claim 13, **characterized in that** each storage opening (8) of the support plate (7) is assigned a respective recess (21) on the upper side (10) of the pipette tip contact piece (14).

15. Storage box (1) according to one of claims 11 to 14, **characterized in that** it further comprises:
- a lower base plate (9) which is arranged on the underside (26) of the frame part (4) and parallel to the support plate (7), wherein the base plate (9) comprises an upper side (10) facing the support plate (7) and an underside (19) opposite said upper side,
wherein the base plate (9) is electrically conductive for receiving and dissipating electrostatic charges, and
wherein the electrically conductive contact plate is arranged on the upper side (10) of the base plate (9).

16. Storage box (1) according to one of claims 7 to 10 or 15, **characterized in that** the electrically conductive material of the base plate (9) is provided by a coating of the base plate (9) or that the base plate (9) is made of an electrically conductive material.

17. Method of dissipating electrostatic charges from a pipette tip (2) made of plastic, comprising:
- providing at least one storage box (1) according to one of claims 1 to 16 with an inserted pipette tip (2) made of plastic and
- moving the storage box (1) with the inserted pipette tip (2).

18. Method according to claim 17, **characterized in that** the storage box (1) is repositioned and thereby moved by means of a robot gripper (29) of a liquid handling platform (23), wherein the inserted pipette tip (2) is moved by moving the storage box (1) and thus contacts the pipette tip contact piece (14) with its outlet end (31).

19. Method according to claim 18, **characterized in that** the storage box (1) is repositioned on an electrically conductive working surface (24) of the liquid handling platform (23), which is optionally grounded.

20. Method according to one of claims 17 to 19, **characterized in that** at least one pipette tip (2) of the storage box (1) is placed on a pipette of a liquid handling platform (23) and is then inserted into a free storage opening (8) of this storage box (1) or of another storage box (1).

21. Method according to claim 20, **characterized in that** between placing the pipette tip (2) on a pipette and inserting the pipette tip (2) into a storage box (1), at least one method step is carried out with the liquid handling platform (23), which is selected from a group comprising:
- aspirating a liquid, and
- dispensing a liquid.

## Revendications

1. Boîte de rangement (1) pour ranger des embouts de pipette en plastique (2) laquelle comprend :
- un élément de cadre électriquement non conducteur (4) constitué de deux parois longitudinales (5) et de deux parois transversales (6), les parois longitudinales (5) et les parois transversales (6) enfermant latéralement un espace intérieur et laissant une première ouverture au niveau d'une partie supérieure (25) de l'élément de cadre (4) et une deuxième ouverture au niveau d'une partie inférieure (26) de l'élément de cadre (4),
- une plaque de support électriquement non conductrice (7) pour les embouts de pipettes en plastique (2) qui est reliée à la partie supérieure (25) de l'élément de cadre (4) et qui recouvre essentiellement la première ouverture,
la plaque de support (7) comprenant une pluralité d'ouvertures de rangement (8) pour insérer les embouts de pipette en plastique (2) ; **caractérisée en ce que** la boîte de rangement (1) comprend une pièce de contact d'embouts de pipette (14) électriquement conductrice agencée sur la partie inférieure (26) de l'élément de cadre (4) et s'étendant parallèlement à la plaque de support (7), laquelle pièce de contact d'embouts de pipette s'étend pour faire contact avec au moins un embout de pipette en plastique (2) inséré dans une des ouvertures de rangement (8) sur une hauteur H_{K} dans la direction de la plaque de support supérieure (7).

2. Boîte de rangement (1) selon la revendication 1, **caractérisée en ce que** la pièce de contact d'embouts de pipette (14) est formée par une pluralité de tiges longitudinales (11) et/ou une pluralité de tiges transversales (12), qui sont électriquement conductrices, chaque tige longitudinale (11) s'étendant essentiellement parallèlement aux parois longitudinales (5) de l'élément de cadre (4) et sur une hauteur Hₖ depuis la partie inférieure (26) en direction de la plaque de support (7), et chaque tige transversale (12) s'étendant essentiellement parallèlement aux parois transversales (6) de l'élément de cadre (4) et sur une hauteur H_{K} depuis la partie inférieure (26) en direction de la plaque de support (7), de sorte qu'un embout de pipette (2) inséré dans une ouverture de rangement (8) peut être contacté par l'une des tiges longitudinales (11) ou par l'une des tiges transversales (12).

3. Boîte de rangement (1) selon la revendication 2, **caractérisée en ce que** la pièce de contact d'embouts de pipette (14) est formée par une pluralité de tiges longitudinales (11) et de tiges transversales (12).

4. Boîte de rangement (1) selon la revendication 3, **caractérisée en ce que** chaque tige longitudinale (11) et chaque tige transversale (12) est électriquement conductrice.

5. Boîte de rangement (1) selon la revendication 3 ou 4, **caractérisée en ce que** les tiges longitudinales (11) et les tiges transversales (12) sont agencées dans l'espace intérieur de l'élément de cadre (4) de telle façon qu'elles forment un agencement de logements (13) pour les embouts de pipette en plastique (2) insérés dans la plaque de support (7).

6. Boîte de rangement (1) selon la revendication 5, **caractérisée en ce qu'il** est associé à chaque logement (13) une ou une pluralité d'ouvertures de rangement (8) dans la plaque de support (7).

7. Boîte de rangement (1) selon l'une des revendications précédentes, **caractérisée en ce que** la boîte de rangement (1) comprend en outre :
- une plaque de fond inférieure (9) agencée sur la partie inférieure (26) de l'élément de cadre (4) et parallèlement à la plaque de support (7), la plaque de fond (9) comprenant une face supérieure (10) orientée vers la plaque de support (7) et une face inférieure (19) opposée,
la plaque de fond (9) étant électriquement conductrice pour recevoir et/ou évacuer des charges électrostatiques, et
la pièce de contact d'embouts de pipette (14) étant agencée sur la face supérieure (10) de la plaque de fond (9).

8. Boîte de rangement (1) selon la revendication 7, **caractérisée en ce que** la plaque de fond (9) est réalisée d'un seul tenant avec les tiges longitudinales (11) et/ou les tiges transversales (12) et **en ce qu'**elle peut être reliée à la partie inférieure de l'élément de cadre (4).

9. Boîte de rangement (1) selon la revendication 7, **caractérisée en ce que** la plaque de fond (9) et les tiges longitudinales (11) et/ou les tiges transversales (12) sont réalisées d'un seul tenant et **en ce qu'**elles sont fournies par un conteneur (15) séparé de l'élément de cadre (4), le conteneur (15) pouvant être adapté dans ses dimensions à l'élément de cadre (4), de sorte que l'élément de cadre (4) peut être inséré dans le conteneur (15).

10. Boîte de rangement (1) selon l'une des revendications 2 à 9, **caractérisée en ce que** les tiges longitudinales (11) et/ou les tiges transversales (12) sont recouvertes d'un matériau électriquement conducteur ou sont fabriquées à partir d'un matériau électriquement conducteur.

11. Boîte de rangement (1) selon la revendication 1, **caractérisée en ce que** la pièce de contact d'embouts de pipette (14) est une plaque de contact électriquement conductrice agencée sur la partie inférieure (26) de l'élément de cadre (4).

12. Boîte de rangement (1) selon la revendication 11, **caractérisée en ce que** la plaque de contact électriquement conductrice est une plaque en mousse électriquement conductrice, de préférence en mousse semi-rigide électriquement conductrice ou bien une plaque en caoutchouc électriquement conducteur.

13. Boîte de rangement (1) selon la revendication 11 ou 12, **caractérisée en ce que** la pièce de contact d'embouts de pipette (14) comprend une face supérieure (20) orientée vers la plaque de support (7) ainsi que, sur sa face supérieure (20), un agencement de renfoncements (21) pour recevoir un ou plusieurs embouts de pipette (2).

14. Boîte de rangement (1) selon la revendication 13, **caractérisée en ce qu'**il est associé à chaque ouverture de rangement (8) de la plaque de support (7) un renfoncement (21) sur la face supérieure (10) de la pièce de contact d'embouts de pipette (14).

15. Boîte de rangement (1) selon l'une des revendications 11 à 14, **caractérisée en ce qu'**elle comprend en outre :
- une plaque de fond inférieure (9) agencée sur la partie inférieure (26) de l'élément de cadre (4) et parallèlement à la plaque de support (7), la plaque de fond (9) comprenant une face supérieure (10) orientée vers la plaque de support (7) et une face inférieure (19) opposée,
la plaque de fond (9) étant électriquement conductrice pour recevoir et évacuer les charges électrostatiques, et
la plaque de contact électriquement conductrice étant agencée sur la face supérieure (10) de la plaque de fond (9).

16. Boîte de rangement (1) selon l'une des revendications 7 à 10 ou 15, **caractérisée en ce que** le matériau électriquement conducteur de la plaque de fond (9) est fourni par un revêtement de la plaque de fond (9), ou **en ce que** la plaque de fond (9) est fabriquée à partir d'un matériau électriquement conducteur.

17. Procédé pour évacuer les charges électrostatiques d'un embout de pipette (2) en plastique, comprenant :
- fournir au moins une boîte de rangement (1) selon l'une des revendications 1 à 16 avec un embout de pipette en plastique (2) inséré, et
- faire bouger la boîte de rangement (1) avec l'embout de pipette (2) inséré.

18. Procédé selon la revendication 17, **caractérisé en ce que** la boîte de rangement (1) est repositionnée et mouvée à l'aide d'une pince de robot (29) d'une plateforme de manipulation des liquides (23), le mouvement de la boîte de rangement (1) faisant déplacer l'embout de pipette (2) inséré et le mettant en contact par son extrémité de sortie (31) avec la pièce de contact d'embouts de pipette (14).

19. Procédé selon la revendication 18, **caractérisé en ce que** la boîte de rangement (1) est repositionnée sur une surface de travail électriquement conductrice (24) de la plateforme de manipulation des liquides (23), laquelle est raccordée à la terre en option.

20. Procédé selon l'une des revendications 17 à 19, **caractérisé en ce qu'**au moins un embout de pipette (2) de la boîte de rangement (1) est inséré sur une pipette d'une plateforme de manipulation des liquides (23) et installé ensuite dans une ouverture de rangement (8) libre de cette boîte de rangement (1) ou d'une autre boîte de rangement (1).

21. Procédé selon la revendication 20, **caractérisé en ce qu'**il est réalisé, entre la pose de l'embout de pipette (2) sur une pipette et l'introduction de l'embout de pipette (2) dans une boîte de rangement (1) au moins une étape de procédé avec la plateforme de manipulation des liquides (23), laquelle étape est choisie parmi un groupe comprenant :
- l'aspiration d'un liquide, et
- la distribution d'un liquide.
